# NEW EUROPEAN PATENT SPECIFICATION

(11) **EP 1 190 316 B2**
(45) Date of publication and mention of the opposition decision: **05.08.2015**
(45) Mention of the grant of the patent: 16.06.2004
(21) Application number: 00921312.5
(22) Date of filing: 20.01.2000
(51) Int. Cl.: G06F 9/46, G06F 1/00, G07F 7/10

(54) **TECHNIQUES FOR PERMITTING ACCESS ACROSS A CONTEXT BARRIER IN A SMALL FOOTPRINT DEVICE USING GLOBAL DATA STRUCTURES**
TECHNIKEN ZUM ERLAUBEN VON ZUGANG DURCH EINE KONTEXTSPERRE IN EINEM KLEINEN GERÄT UNTER VERWENDUNG VON GLOBALEN DATENSTRUKTUREN
TECHNIQUES PERMETTANT L'ACCES DANS UNE BARRIERE DE CONTEXTE DANS UN DISPOSITIF A FAIBLE ENCOMBREMENT A L'AIDE DE STRUCTURES DE DONNEES GLOBALES

(30) Priority: 22.01.1999 US 235156
(43) Date of publication of application: 27.03.2002
(60) Divisional application: 04005672.3
(73) Proprietor: Oracle America, Inc., Redwood City, CA 94065 (US)
(72) Inventor: SUSSER, Joshua, San Francisco, CA 94114 (US); BUTLER, Mitchel, B., Sunnyvale, CA 94087 (US); STREICH, Andy, Foster City, CA 94404 (US)
(74) Representative: Davies, Simon Robert
(86) International application number: PCT/US2000/001234
(87) International publication number: WO 2000/045262

(56) References cited:
- WO-A-98/19237
- US-A- 5 204 897
- SUN MICROSYSTEMS, INC.: "Java Card Runtime Environment (JCRE) 2.1 Specification - Draft 2" 14 December 1998 (1998-12-14) , PALO ALTO, US XP002138793 cited in the application page 6-2 -page 6-10
- GONG L ET AL: "Going beyond the sandbox: an overview of the new security architecture in the JavaDevelopment Kit 1.2" PROCEEDINGS OF THE USENIX SYMPOSIUM ON INTERNET TECHNOLOGIES AND SYSTEMS, 8 December 1997 (1997-12-08), XP002100907
- N. ISLAM ET AL: "A Flexible Security Model for Using Internet Content" IBM THOMAS J.WATSON RESEARCH CENTER PAPERS, [Online] 28 June 1997 (1997-06-28), XP002138803 Retrieved from the Internet: <URL:http://www.ibm.com/java/education/fle xsecurity/> [retrieved on 2000-05-25]

## Description

### CROSS-REFERENCES TO RELATED APPLICATIONS

This application is related to US-A-6 092 147, entitled "VIRTUAL MACHINE WITH SECURELY DISTRIBUTED BYTE CODE VERIFICATION", in the name of inventors Moshe Levy and Judy Schwabe.

This application is related to EP-A-1 155 365, entitled "TECHNIQUES FOR IMPLEMENTING SECURITY ON A SMALL FOOTPRINT DEVICE USING A CONTEXT BARRIER", in the name of inventors Joshua Susser, Mitchel B. Butler, and Andy Streich.

This application is related to EP-A-1 155 366, entitled "TECHNIQUES FOR PERMITTING ACCESS ACROSS A CONTEXT BARRIER ON A SMALL FOOTPRINT DEVICE USING AN ENTRY POINT OBJECT", in the name of inventors Joshua Susser, Mitchel B. Butler, and Andy Streich.

This application is related to EP-A-1 163 579, entitled "TECHNIQUES FOR PERMITTING ACCESS ACROSS A CONTEXT BARRIER ON A SMALL FOOTPRINT DEVICE USING RUN TIME ENVIRONMENT PRIVILEGES", in the name of inventors Joshua Susser, Mitchel B. Butler, and Andy Streich.

This application is related to EP-A-1 151 378, entitled "TECHNIQUES FOR PERMITTING ACCESS ACROSS A CONTEXT BARRIER IN A SMALL FOOTPRINT USING SHARED OBJECT INTERFACES", in the name of inventors Joshua Susser, Mitchel B. Butler, and Andy Streich.

### BACKGROUND OF THE INVENTION

### Field of the Invention

The invention relates to computer security and more particularly to techniques for implementing a security on small footprint devices, such as smart cards.

### Description of Related Art

A number of object oriented programming languages are well known in the art. Examples of these include the C++ language and the Smalltalk language.

Another such object oriented language is the JAVA™ language. This language is described in the book Java™ Language Specification, by James Gosling et al. and published by Addison-Wesley. This work is incorporated herein by reference in its entirety. The JAVA™ language is particularly well suited to run on a Java™ Virtual Machine. Such a machine is described in the book Java™ Virtual Machine Specification, by Tim Lindholm and Frank Yellin which is also published by Addison-Wesley.

A number of small footprint devices are also well known in the art. These include smart cards, cellular telephones, and various other small or miniature devices.

Smart cards are similar in size and shape to a credit card but contain, typically, data processing capabilities within the card (e.g. a processor or logic performing processing functions) and a set of contacts through which programs, data and other communications with the smart card may be achieved. Typically, the set of contacts includes a power source connection and a return as well as a clock input, a reset input and a data port through which data communications can be achieved.

Information can be written to a smart card and retrieved from a smart card using a card acceptance device. A card acceptance device is typically a peripheral attached to a host computer and contains a card port, such as a slot, in to which a smart card can be inserted. Once inserted, contacts or brushes from a connector press against the surface connection area on the smart card to provide power and to permit communications with the processor and memory typically found on a smart card.

Smart cards and card acceptance devices (CADs) are the subject of extensive standardization efforts, e.g. ISO 7816.

The use of firewalls to separate authorized from unauthorized users is well known in the network environment. For example, such a firewall is disclosed in US 2002 169 980 entitled "AUTHENTICATED FIREWALL TUNNELLING FRAMEWORK" in the name of inventor David Brownell.

A subset of the full Java™ platform capabilities has been defined for small footprint devices, such as smart cards. This subset is called the Java Card™ platform. The uses of the Java Card™ platform are described in the following publications.

JAVA CARD™ 2.0 -- LANGUAGE SUBSET AND VIRTUAL MACHINE SPECIFICATION;

JAVA CARD™ 2.1 -- APPLICATION PROGRAMMING INTERFACES;

JAVA CARD™ 2.0 -- PROGRAMMING CONCEPTS;

JAVA CARD™ APPLET DEVELOPER'S GUIDE.

These publications are incorporated herein by reference in their entirety.

A working draft of ISO 7816 -- Part 11 has been circulated for comment. That draft specifies standards for permitting separate execution contexts to operate on a smart card. A copy of that working draft is hereby incorporated by reference in its entirety.

The notion of an execution context is well known in computer science. Generally speaking, the use of multiple execution contexts in a computing environment provides a way to separate or isolate different program modules or processes from one another, so that each can operate without undue interference from the others. Interactions --if any-- between different contexts are deliberate rather than accidental, and are carefully controlled so as to preserve the integrity of each context. An example of multiple contexts is seen in larger hardware devices, such as mainframes, where a plurality of virtual machines may be defined, each such virtual machine having its own execution context. Another example is seen in U.S. Patent No. 5,802,519 in the name of inventor De Jong, which describes the use of multiple execution contexts on a smart card. It will be appreciated by those of skill in the art that a computing environment which provides multiple execution contexts also needs to provide a mechanism for associating any given executing code with its corresponding context.

Also well known is the notion of a current context. Certain computing environments that support multiple contexts will, at any given time, treat one context in particular as an active focus of computation. The context can be referred to as the "current context." When the current context changes, so that some other context becomes the current context, a "context switch" is said to occur. As will be appreciated by those of skill in the art, these computing environments provide mechanisms for keeping track of which context is the current one and for facilitating context switching.

In the prior art, in the world of small footprint devices, and particularly in the world of smart cards, there was no inter-operation between contexts operating on the small footprint devices. Each context operated totally separately and could operate or malfunction within its context space without affecting other applications or processes in a different context.

One layer of security protection utilized by the Java™ platform is commonly referred to as a sandbox model. Untrusted code is placed into a "sandbox" where it can "play" safely without doing any damage to the "real world" or full Java™ environment. In such an environment, Java™ applets don't communicate, but each has its own name space.

Some smart card operating systems don't permit execution contexts to communicate directly, but do permit communications through an operating system, or through a server.

### The Problems

A number of problems exist when trying to place computer programs and other information on a small footprint device. One of the compelling problems is the existence of very limited memory space. This requires often extraordinary efforts to provide needed functionality within the memory space.

A second problem associated with small footprint devices is the fact that different small footprint device manufacturers can utilize different operating systems. As a result, applications developed for one operating system are not necessarily portable to small footprint devices manufactured by a different manufacturer.

If programs from more than one source of programs (manufacturer or vendor) are to be applied to a single small footprint device, security becomes a factor as one attempts to avoid corruption of existing programs and data when a new program is loaded on to the small footprint device. The same concern exists when one wishes to prevent a hacker or a malicious person from accessing programs and data.

It is clear that small footprint devices such as smart cards don't have the resources necessary to implement separate virtual machines. Nevertheless, it is desirable to maintain strict security between separate execution contexts.

In the past, security was provided by loading only applications from the same source or from a known trusted source onto a smart card or other small footprint device.

Accordingly, it would be desirable to allow object-oriented interaction between selected execution contexts only in safe ways via fast efficient peer to peer communications which do not impose undue burdens on the programmer but facilitate dynamic loading of applets written at different times by untrusted sources.

### SUMMARY OF THE INVENTION

The invention is directed to providing a context barrier (sometimes referred to as a firewall) for providing separation and isolation of one context from another and to provide controlled access across the barrier when that is needed.

In accordance with the invention, two execution contexts, e.g. each containing one or more applets, running in the same logical (i.e., virtual or real) machine, protected from each other, can share information in a controlled, secure way, using language mechanisms, such as object-oriented language mechanisms. Security can be, for example, object by object. Thus, a method in a first execution context can access a first object A in a second execution context, but not a second object B in the second execution context on a selective basis.

In accordance with one exemplary embodiment, an enhanced Java™ Virtual Machine (VM) provides certain run-time checks of attempted access across execution contexts in the VM. Checks can be automatic by the VM or coded by the programmer with support from the VM. This can be done using language-level communication mechanisms. In this way, one can express object access across execution contexts in the same way as other object accesses using the language are made. These run-time checks provide a second dimension of defense/security beyond that which the Java™ language and platform already provide.

These mechanisms provide protection against, e.g., security holes due to programming bugs (such as declaring a datum "public" (global) when it shouldn't be accessible to all contexts). They also allow fine-grain control of sharing (such as selection of objects to share and applets to share to).

The invention is also directed to computer program products.

The foregoing and other features, aspects and advantages of the present invention will become more apparent from the following detailed description of the present invention when taken in conjunction with the accompanying drawings.

### BRIEF DESCRIPTION OF THE DRAWINGS

The features and advantages of the present invention will be apparent from the following description in which:
**Figure 1** is an illustration of a computer equipped with a card acceptance device and of a smart card for use with the card acceptance device.
Figure 2 is an illustration of a computer equipped with a card acceptance device connected to a network.
Figure 3 is an exemplary hardware architecture of a small footprint device, such as a smart card, of the prior art.
**Figure 4** illustrates objects being accessed by principals as done in the prior art.
**Figure 5** is an exemplary security model which can be used in explaining the various embodiments of the invention.
**Figure 6** is a block diagram showing separation of execution contexts by a firewall or context barrier in accordance with one aspect of the invention.
**Figure 7** is a representation of a software architecture useful in carrying out the invention.
**Figure 8** is a flow chart of a security enforcement process implementing a firewall in accordance with one aspect of the invention.
**Figure 9** is a block diagram showing object access across a firewall in accordance with one aspect of the invention.
**Figure 10** is a block diagram showing cascaded object access across a firewall.
**Figure 11** is a flow chart of a process for permitting access by a principal in one context across a firewall into another context.
**Figure 12** is a block diagram illustrating the use of an entry point object to permit access across a firewall.
**Figure 13** is a block diagram illustrating the use of a global data structure such as an array for access across a firewall.
**Figure 14** is a block diagram illustrating the use of a supercontext to permit access across a firewall.
**Figure 15** is a block diagram illustrating the use of shareable interface objects to permit access across a firewall.
**Figure 16** is a flow chart of a security enforcement process permitting access across a firewall.
**Figure 17** is the flow chart of **Figure 16** showing details of block **1620**.
**Figure 18** is a flow chart showing an exemplary implementation of block **1629** of **Figure 17**.

### NOTATIONS AND NOMENCLATURE

The detailed descriptions which follow may be presented in terms of program procedures executed on a computer or network of computers. These procedural descriptions and representations are the means used by those skilled in the art to most effectively convey the substance of their work to others skilled in the art.

A procedure is here, and generally, conceived to be a self-consistent sequence of steps leading to a desired result. These steps are those requiring physical manipulations of physical quantities. Usually, though not necessarily, these quantities take the form of electrical or magnetic signals capable of being stored, transferred, combined, compared, and otherwise manipulated. It proves convenient at times, principally for reasons of common usage, to refer to these signals as bits, values, elements, symbols, characters, terms, numbers, or the like. It should be noted, however, that all of these and similar terms are to be associated with the appropriate physical quantities and are merely convenient labels applied to these quantities.

Further, the manipulations performed are often referred to in terms, such as adding or comparing, which are commonly associated with mental operations performed by a human operator. No such capability of a human operator is necessary, or desirable in most cases, in any of the operations described herein which form part of the present invention; the operations are machine operations. Useful machines for performing the operation of the present invention include general purpose digital computers or other computational devices.

Apparatus for performing these operations may be specially constructed for the required purpose or it may comprise a general purpose computer as selectively activated or reconfigured by a computer program stored in the computer. The procedures presented herein are not inherently related to a particular computer or other apparatus. Various general purpose machines may be used with programs written in accordance with the teachings herein, or it may prove more convenient to construct more specialized apparatus to perform the required method steps. The required structure for a variety of these machines will appear from the description given.

### DETAILED DESCRIPTION

Attached as an Appendix to this specification is an unpublished draft of a document entitled JAVA CARD RUNTIME ENVIRONMENT 2.1 SPECIFICATION. This draft document, which provides further detailed description of specific embodiments of the invention, is incorporated in its entirety as an integral part of the present specification.

Although the inventive techniques are described hereinafter in the context of a smart card example, the example is merely illustrative and shouldn't limit the scope of the invention.

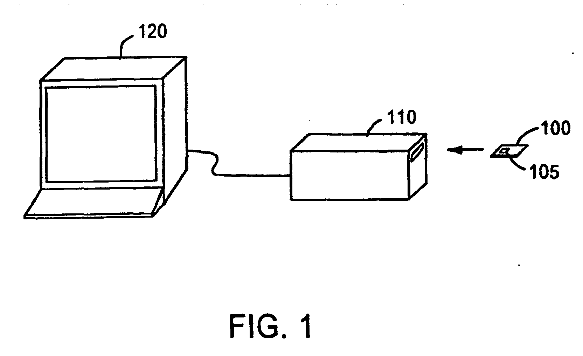

**Figure 1** is an illustration of a computer **120** equipped with a card acceptance device 110 and a smart card 100 for use with the card acceptance device 110. In operation, the smart card **100** is inserted into card acceptance device **110** and power and data connections applied through a set of contacts **105** accessible at the surface of the smart card **100.** When the card is inserted, mating contacts from the card acceptance device **110** interconnect with the surface contacts **105** to power-up the card and permit communications with the onboard processor and memory storage.

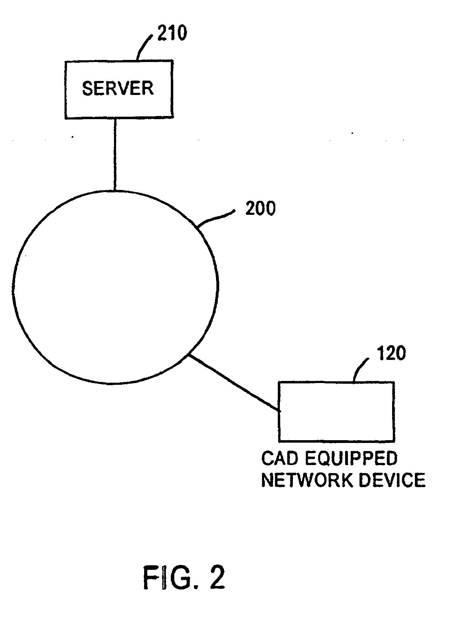

**Figure 2** is an illustration of a computer equipped with a card acceptance device, such as **120** in **Figure 1****,** connected to a network **200.** Also connected to a network are a plurality of other computing devices, such as server **210**. It is possible to load data and software onto a smart card over the network **200** using card equipped device **120**. Downloads of this nature can include applets or other programs to be loaded onto a smart card as well as digital cash and other information used in accordance with a variety of electronic commerce and other applications. The instructions and data used to control processing elements of the card acceptance device and of the smart card may be stored in volatile or non-volatile memory or may be received directly over a communications link, e.g., as a carrier wave containing the instructions and/or data. Further, for example, the network can be a LAN or a WAN such as the Internet or other network.

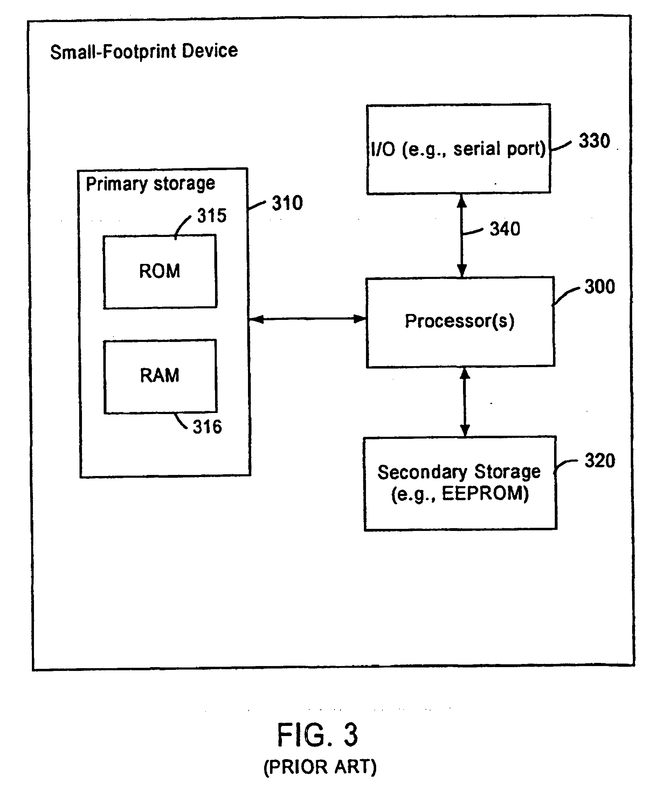

**Figure 3** is an exemplary hardware architecture of a small footprint device, such as a smart card, of the prior art. As shown in **Figure 3**, a processor **300** interconnects with primary storage **310** which may include read only memory **315** and/or random access memory **316.** The processor also connects with a secondary storage **320** such as EEPROM and with an input/output **330,** such as a serial port. One can see the small footprint devices of this nature can be very simple.

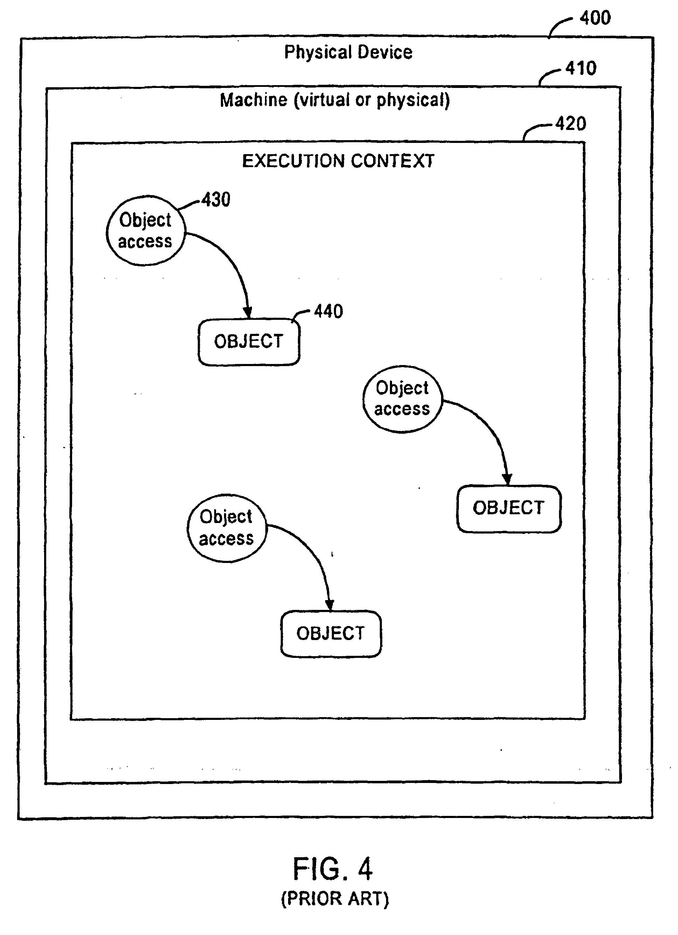

**Figure 4** illustrates objects being accessed by principals as done in the prior art. As shown in **Figure 4****,** physical device **400,** such as the small footprint device may have contained within it one or more processing machines (virtual or physical) which are running an execution context **420**. The execution context may be, for example, a context associated with a particular applet. One or more principals **430** (e.g., applets or applications) in the execution context may seek to access other objects within the execution context. As long as the access occurs within the execution context, the accesses will be permitted and everything will function normally.

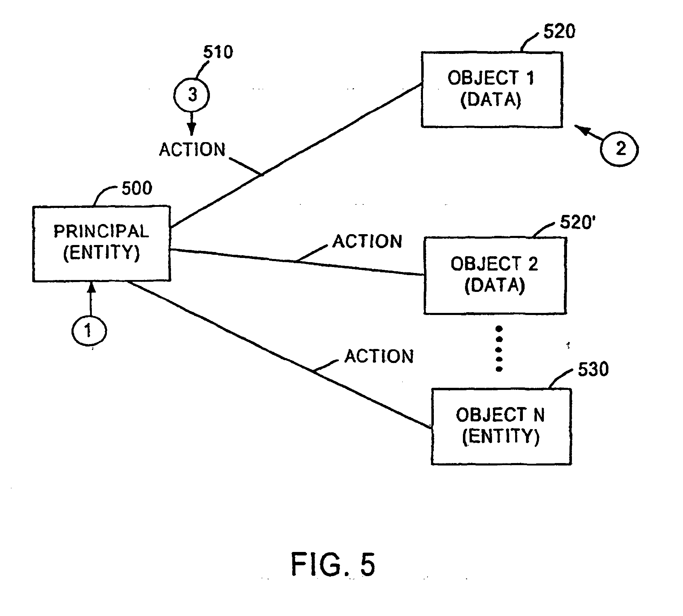

**Figure 5** is an exemplary security model which can be used in explaining the various embodiments of the invention. It is just one of many models which might be utilized but is a convenient model for this purpose. In this model, a principal (sometimes called entity) **500** proposes to take an action **510** on an object, such as object **520**. Security checks may be imposed on the principal, on the object, and/or on the action proposed to be taken.

In **Figure 5**, two types of objects are shown on which action may be taken by a principal. These include data objects, (e.g. data1 and data2 (**520, 520'**)) and entity **530**. A principal may operate or attempt to operate on any of these objects.

While data is passive, an entity **530** is active. The diagram line from Principal to an active entity is also labeled "action," but this could be a more sophisticated and arbitrarily complex action, such as making a function or method call or sending a message as compared with action on a data object. As with data, a security check enforced by the operating system may use the identity of the principal, the identity of the entity, and/or the type of action. Furthermore, the entity, being active, can perform its own additional security checks. These can be as arbitrarily complex as one desires, and can make use of the identity of the Principal, the identity of the entity itself, the action, and/or any other information that is available.

In an object-oriented system (such as the Java Card™ platform) "objects" are typically a combination of data and entity. When a Principal tries to access a field of an object, this is a data access--a fairly simple action protected by a fairly simple security check. When a Principal tries to access a method of an object, this is an entity access, which can be arbitrarily complex both in action and in security check.

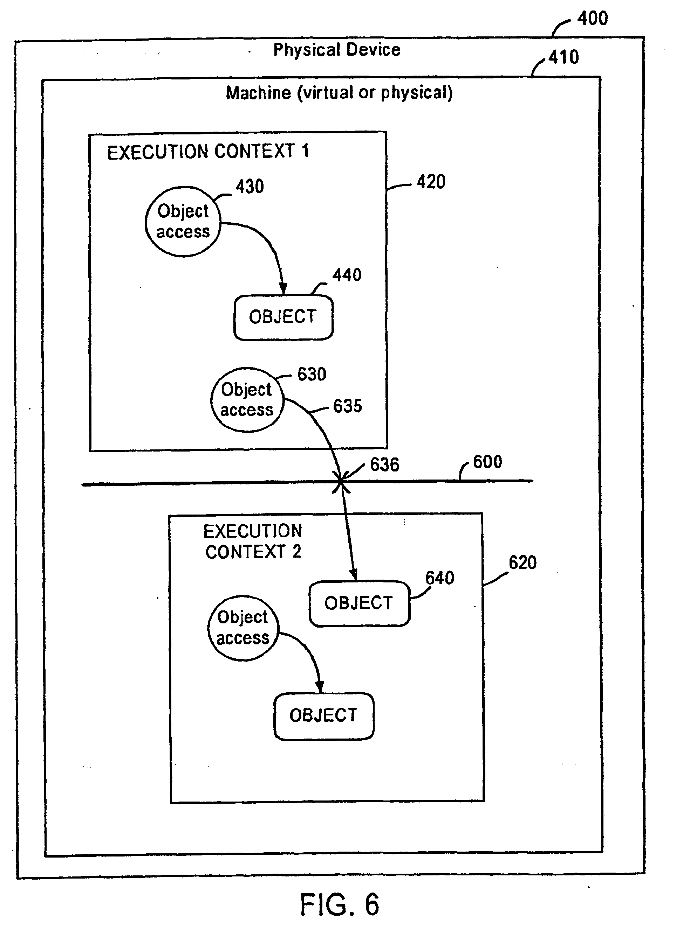

**Figure 6** is a block diagram showing separation of execution contexts by a firewall or context barrier in accordance with one aspect of the invention. The physical device **400** and the machine **410** correspond to the same items shown in **Figure 4**. An execution context **420** shows one principal **430** attempting to access object **440** within the context. This access would normally succeed. However, execution context **420** also shows a principal **630** attempting to access object **640** of execution context **620**, across a context barrier **600.** Normally, this access would be prohibited as indicated by the **X 636** where the action **635** crosses the context barrier **600.**

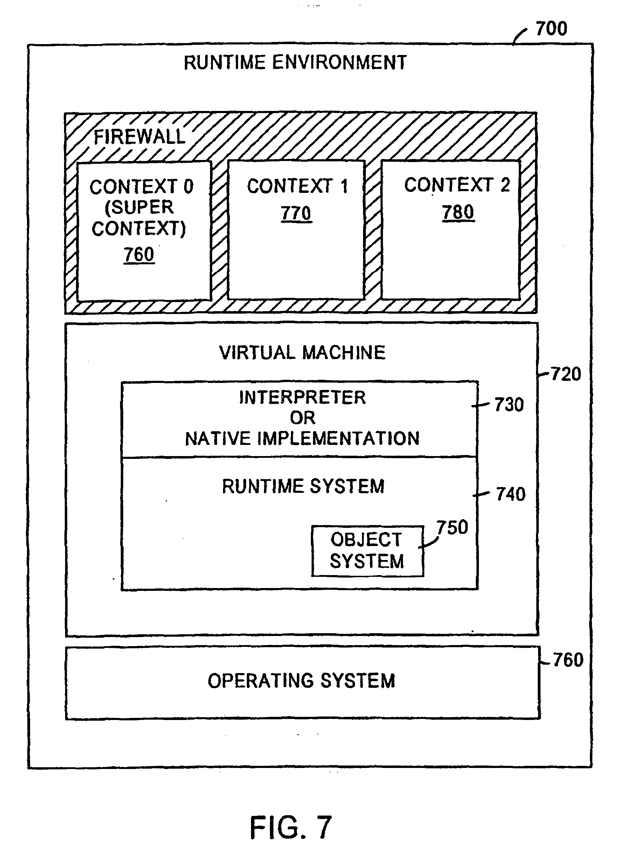

**Figure 7** is a representation of a software architecture useful in carrying out the invention. This software architecture is shown as a run time environment **700.** An operating system **710** for the small footprint device is commonly used. A virtual machine **720**, in an exemplary embodiment of the invention, is implemented over the operating system. The virtual machine could be a Java Card™ virtual machine or other virtual machine. The capabilities of a standard virtual machine can be expanded to provide the additional functionality described herein or the functionality can be provided as separate modules. The virtual machine **720** may include an interpreter or native implementation **730** which provides access to a run time system **740**. The run time system includes object system **750** for managing the objects of an object oriented implementation. Three contexts, **760, 770** and **780**, are shown. Each context is separated from the other by a context barrier (sometimes referred to as a firewall) between the execution contexts. Context **760** is, in one specific embodiment, a supercontext. That is, context **760** has privileges and capabilities not available to subordinate contexts **770** and **780**, potentially including privileges to create entry point objects or global data structures, and to access objects in subordinate contexts **770** and **780**.

Every object is associated with one particular context. That context is said to own each object that is associated with it. The runtime system **740** provides a means for uniquely identifying contexts, and a means for specifying and identifying the currently executing context. The object system **750** provides a mechanism for associating objects with their owning contexts.

For example, the runtime **740** can identify contexts with a unique name, and correspondingly the object system **750** can associate objects with that context by recording the context's name in the object's header. Information in the object's header cannot be accessed by programs written in the object-oriented language, but is only available to the virtual machine **720** itself. Alternately, the runtime system **740** can identify contexts by dividing the memory space into separate regions, each for a particular context, and correspondingly the object system **750** can associate objects with that context by allocating the object's storage in that context's memory space.

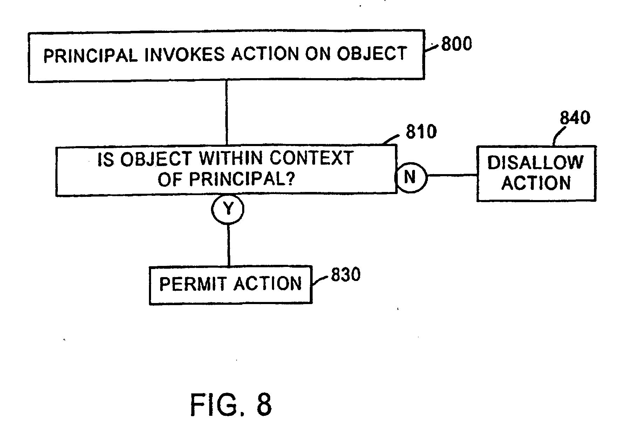

**Figure 8** is a flow chart of a security enforcement process implementing a context barrier in accordance with one aspect of the invention. When a principal invokes an action on an object (**800**) a check is made to determine whether the object is within the context of the principal (**810**). If it is not, the action is disallowed (**840**). Otherwise, the action is permitted (**830**). This is the simplest form of context barrier or firewall. In one specific embodiment the action is disallowed (**840**) by throwing a security exception if the object is outside of the namespace or the memory space of the context requesting access.

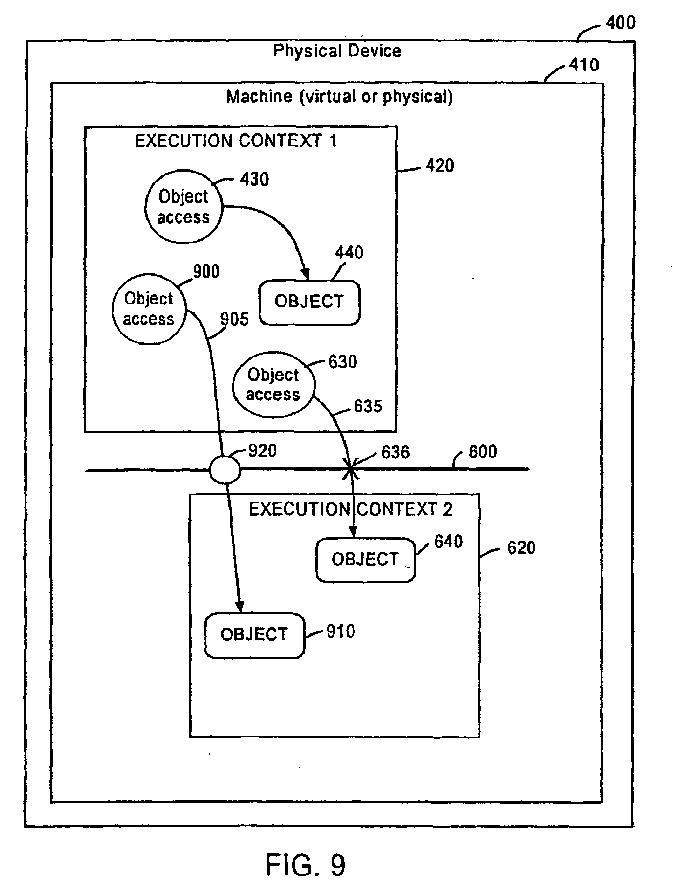

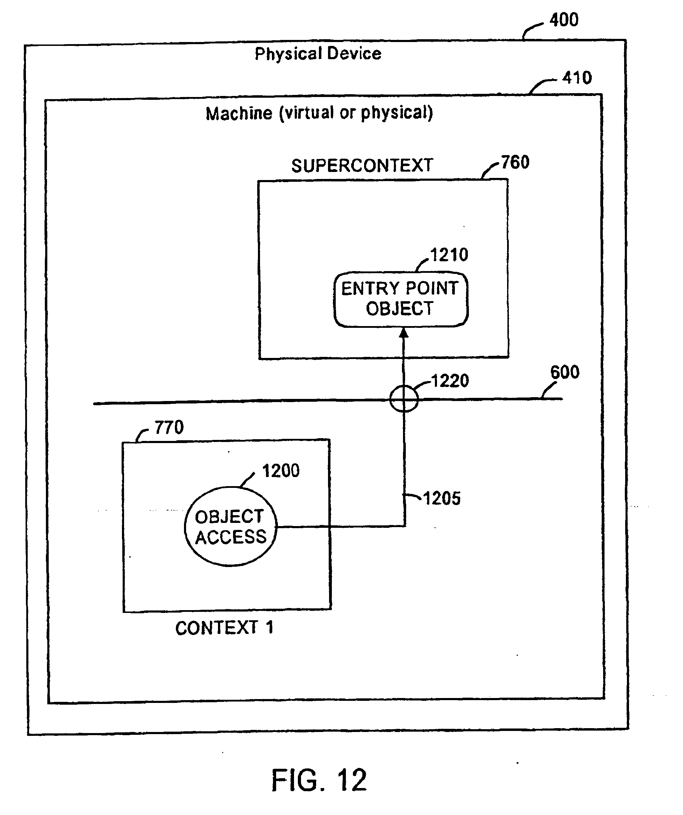

**Figure 9** is a block diagram showing object access across a firewall in accordance with one aspect of the invention. **Figure 9** is substantially similar to **Figure 6**. However, **Figure 9** also shows principal **900** seeking to access object **910** in order to perform action **905** on the object **910**. According to the invention, rather than having the access blocked by the firewall **600**, in the way that action **635** is blocked, action **905** is permitted to occur across the firewall through access point **920** so that principal **900** can perform action **905** on object **910** notwithstanding the fact that the principal and the object are in different execution contexts. The mechanisms behind access point **920** are described below with reference to **Figures 12-18**. Note that access point **920** can coexist with obstructed accesses such as **X 636**. Thus access point **920** provides fine-grain control of sharing (object by object security) across context barrier **600**.

When object access **900** is initiated, the current context setting is context **420**. If the object **910** is a data object, the action **905** is a simple data access, and no code is executed in the second context **620**. If the object **910** is an entity object, and the action **905** results in that object's code being executed, that code is executed in the second context **620**. To execute the code of object **910** in the correct context **620**, the virtual machine **410** performs a context switch. The context switch changes the current context setting to be context **620**, and the previous value of the current context setting is stored so that it can be restored later. From that point on code will execute in the new current context. When the action **905** completes, control is returned to the point following access **900**. During the return, the virtual machine **410** must restore the value of the current context setting to its previous value.

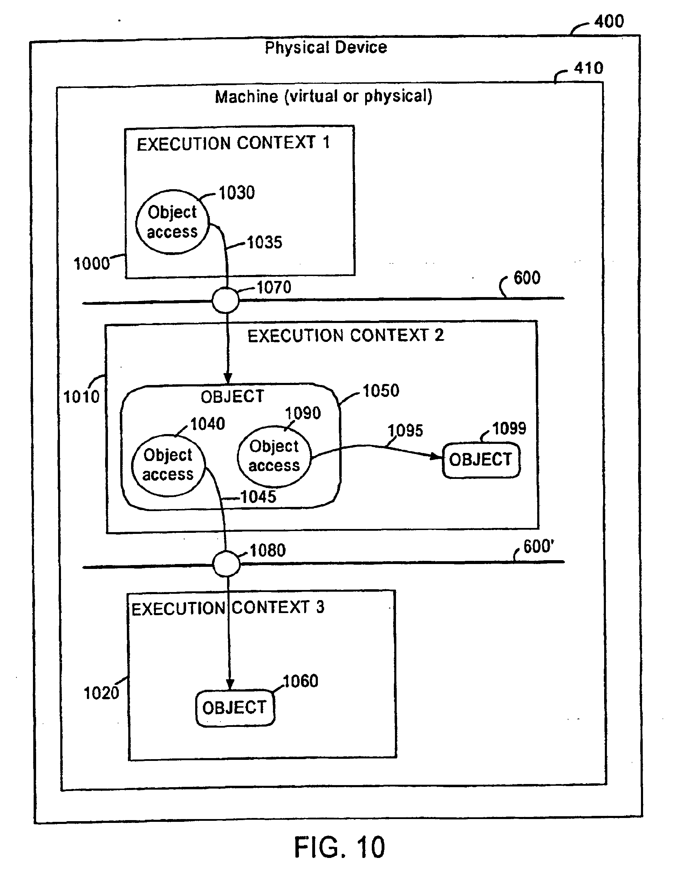

**Figure 10** is a block diagram showing cascaded object accesses across a firewall. **Figure 10** shows three execution contexts, **1000, 1010** and **1020**. Principal **1030** in execution context 1 seeks to invoke an action **1035** on object **1050** in execution context 2 and does so through access point **1070** in context barrier **600**. Object **1050** in execution context 2 has an object access **1040** which seeks to perform an action **1045** on the object **1060** in execution context 3. It achieves this by using access point **1080** in context barrier **600'** separating execution contexts 2 and 3. Object **1050** in execution context 2 also has another object access **1090** which invokes an action **1095** on an object **1099** in the same execution context, that is, in execution context 2. Both actions **1035** and **1045** result in context switches as described in the explanation of **Figure 9****.** But as action **1095** does not cross the context barrier, a context switch is not required for its execution, and therefore does not occur.

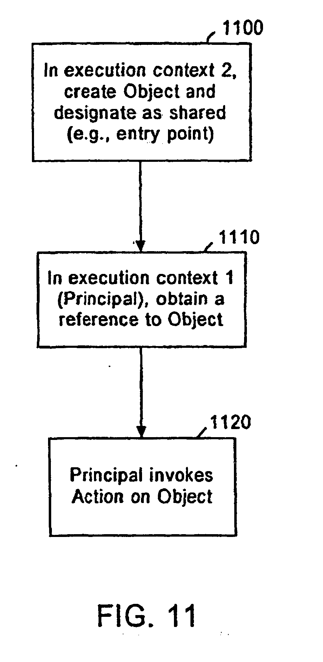

**Figure 11** is a flow chart of a process for permitting access by a principal in one context across a firewall into another context. There are essentially three steps to this process. In execution context 2, an object to be accessed is created and designated as shared **(1100)**. In execution context 1, the principal obtains a reference to the object in execution context 2 **(1110)**. The principal in execution context 1 then invokes an action upon the object designated as shared in context 2 **(1120)**.

With respect to identifying or designating a created object as shareable as discussed in item **1100** of **Figure 11**, this can be done, in accordance with a specific embodiment of the invention, by including a shareable attribute in the header of an object's representation. Information in an object's header cannot be accessed by programs written in the object-oriented language, but is only available to the VM itself.

Obtaining a reference to an object in another context is a special case of accessing an object in another context. A mechanism that provides access to an object in another context can make other objects available also. For instance, invoking a method on an object in another context may return a reference to a second object in a different context. An additional mechanism is required to allow an initial reference to an object in a different context to be obtained. In a specific embodiment, references to certain well-known entry point objects can be obtained using a public API. Once the initial reference to an object in a different context is obtained, further references can be obtained from that object, and so on.

There are four general approaches to obtaining information across a context barrier in accordance with the invention. These approaches can be utilized individually or in combination in order to access an object across a context barrier or to obtain a reference of an object to be accessed across a context barrier **(1110).** These approaches are described in **Figures 12-18****.**

Figure 12 is a block diagram illustrating the use of entry point objects to permit access across a context barrier. As shown in **Figure 12****,** some object **1200** in context **770** (context 1) desires access to information in supercontext **760**. In the specific embodiment, a supercontext **760** contains at least one entry point object **1210**. The entry point object **1210** can be published as part of a public API, or can be made available indirectly through a published API (e.g., in accordance with the mechanisms described previously with reference to Figure 11), so that each context subordinate to the supercontext may communicate with the entry point object of the supercontext. (It will be appreciated that in other embodiments, entry point objects may be housed by a context other than the supercontext.)

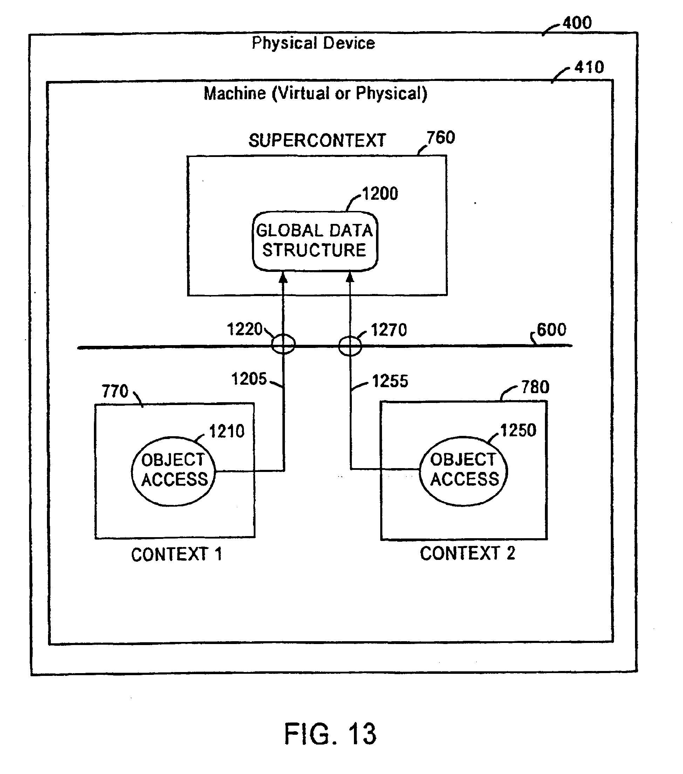

**Figure 13** is a block diagram illustrating the use of global data structures to permit access across a firewall. In this approach, supercontext **760** creates a global data structure such as a global array. In the specific embodiment supercontext **760** is the only context permitted to create such a global data structure. (It will be appreciated that in other embodiments, global data may be housed by a context other than the supercontext.) By virtue of its global status, each of the contexts **770** and **780** may read and write to the global data structure. Thus, information written into the global data structure by one context can be read by another context. For example, this mechanism can be used to pass binary data or references to objects between contexts.

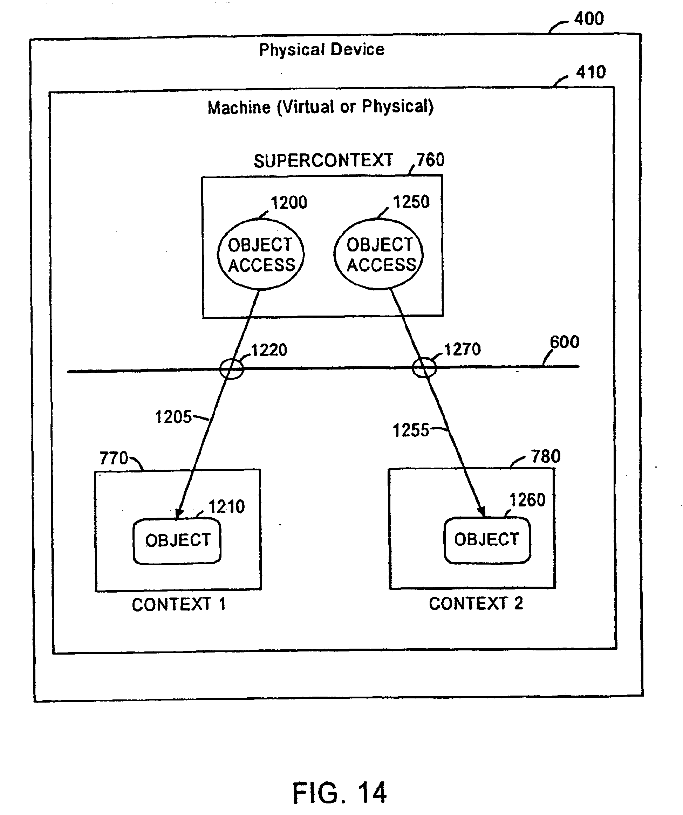

**Figure 14** is a block diagram illustrating the use of supercontext privileges to permit access across a context barrier. In **Figure 14**, an object in supercontext **760** seeks access to context **780** across the context barrier separating the two. Supercontext **760** can invoke any of the methods of context **780** and can access any of the data contained within context **780**, by virtue of the privileges associated with the supercontext.

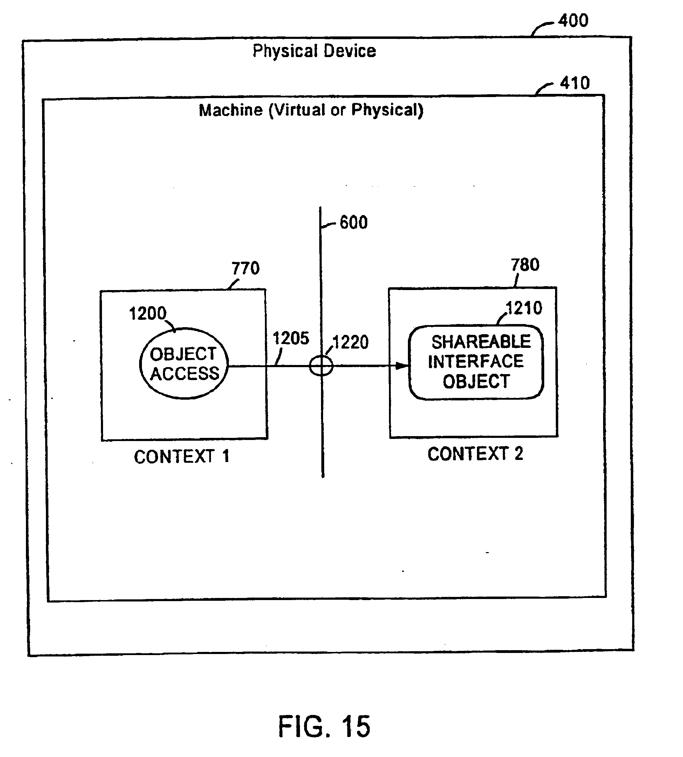

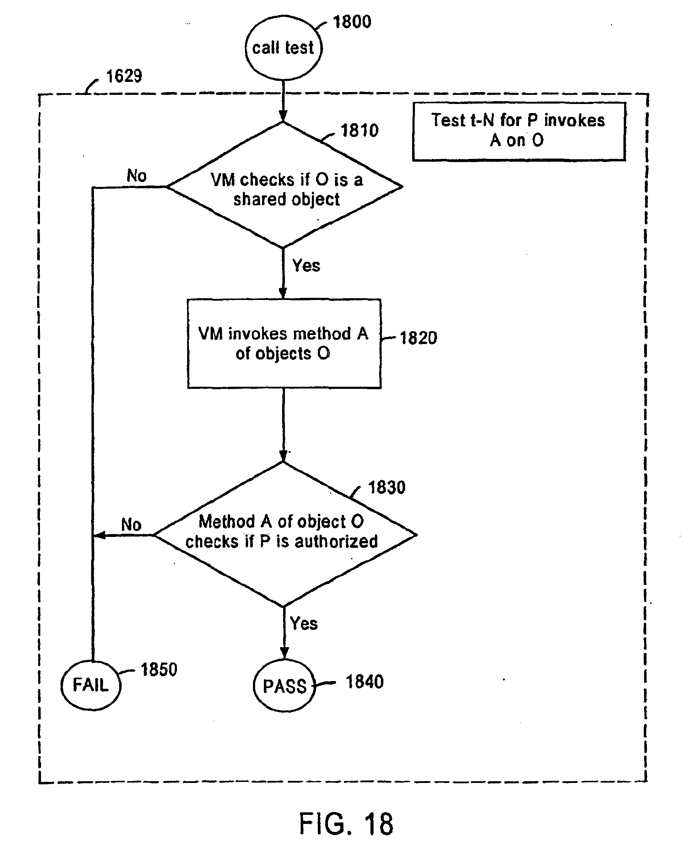

Figure 15 is a block diagram illustrating the use of shareable interface objects to permit access across a firewall. A shareable interface defines a set of shareable interface methods. A shareable interface object is an object that implements at least the set of methods defined in a shareable interface. **In** **Figure 15****,** object **1210** in context 2 **(780)** is a shareable interface object. An object access **1200** in another context **770** can invoke any of the shareable interface methods on the object **1210** if the principal of the object access **1200** is authorized to do so by the object **1210** itself. This authorization is further discussed with reference to **Figure 18** below.

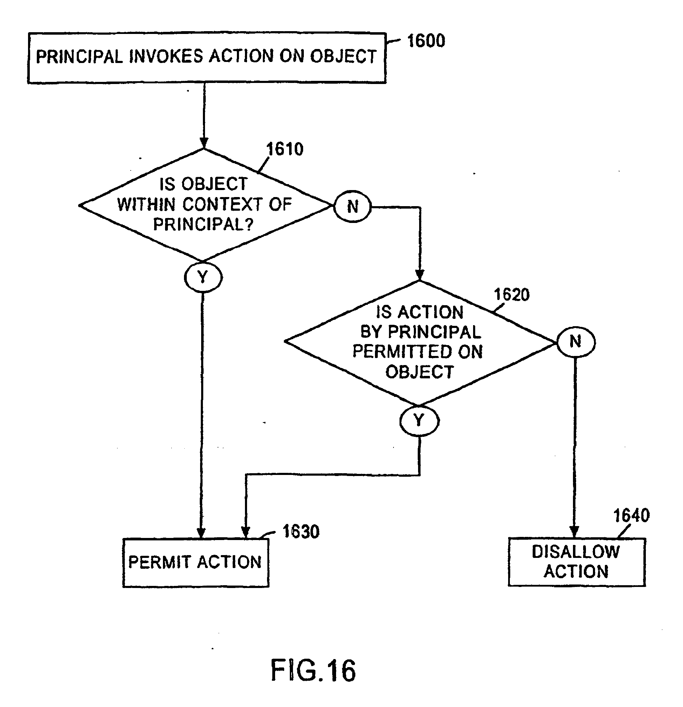

It will be appreciated that a virtual machine consistent with the invention provides functionality beyond that of earlier virtual machines, such as the virtual machine described in the Java™ Virtual Machine Specification. In particular, consistently with the invention, the virtual machine provides functionality to implement or to facilitate a security enforcement process that permits access across a firewall. This process is described next with reference to **Figures 16-18**. Note that it is applicable to any approach for providing access across the firewall, including but not limited to the four approaches described with reference to **Figures 12-15** above.

**Figure 16** is a flow chart of a security enforcement process permitting access across a firewall. When a principal attempts to invoke action on an object **1600,** a check is made to determine if the object is within the context of the principal (**1610**). If it is, (**1610-Y**), the action is permitted (**1630**). If it is not, (**1610-N**), a check is made to see if the action by the principal is permitted on the object (**1620**). If it is, (**1620-Y**), the action is permitted (**1630**). If it is not, (**1620-N**), the action is disallowed. In the specific embodiment a security exception is thrown (**1640**).

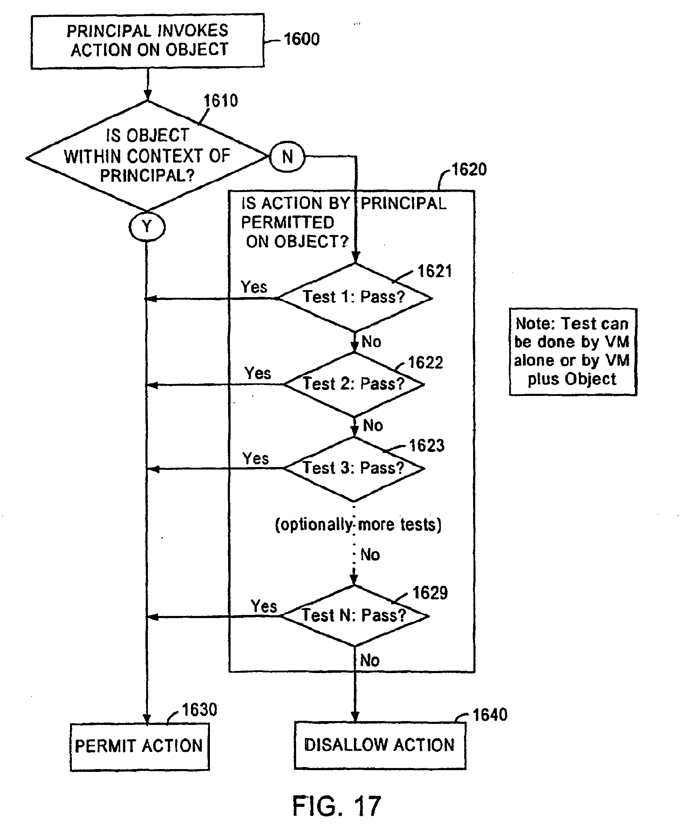

**Figure 17** is the flow chart of **Figure 16** showing further details of block **1620**. If the object is not within the context of the principal **(1610-N),** a plurality of tests, **1621, 1622, 1623... 1629** are undertaken to see if the action by the principal is permitted on the object. These tests can be done by the virtual machine alone or by the virtual machine plus the object, in a virtual machine object oriented implementation. If any of the tests results in a pass, the action is permitted **(1630)**. However, if all tests result in a negative determination **(162X-No),** the action will be disallowed. In a specific embodiment, a security exception will be thrown **(1640)**. These tests relate to the permitted access discussed in conjunction with **Figures 12-15**.

**Figure 18** is a flow chart showing an exemplary implementation of block **1629** of **Figure 17** for use with access method described in **Figure 15**. In a test, such as **829** or **1629,** a virtual machine checks if the object is a shared object **1810**. If it is not **(1810-No),** the test will fail. However, if it is **(1810-Yes),** the virtual machine will invoke the method A on object O **(1820)**. If the method A on object O determines that the principal is authorized **(1830),** the test will be passed **(1840)** and access permitted. Otherwise, the test will fail **(1850)**. This allows the authorization text to be programmed into the code of the object itself.

Devices with a small footprint are generally considered to be those that are restricted or limited in memory or in computing power or speed. Such small footprint devices may include boundary scan devices, field programmable devices, pagers and cellular phones among many others.

In general, small footprint devices are resource constrained computational devices and systems where secure interoperation of execution contexts is a concern. Such small devices impose constraints on the implementation of security measures because of their limited resources. Because of resource constraints, in a virtual machine implementation, a single virtual or physical machine must be used as opposed to multiple virtual machines.

While the Java™ language and platform are suitable for the invention, any language or platform having certain characteristics would be well suited for implementing the invention. These characteristics include type safety, pointer safety, object-oriented, dynamically linked, and virtual-machine based. Not all of these characteristics need to be present in a particular implementation. In some embodiments, languages or platforms lacking one or more of these characteristics may be utilized. A "virtual machine" could be implemented either in bits (virtual machine) or in silicon (real/physical machines).

Although the invention has been illustrated showing object by object security, other approaches, such as class by class security could be utilized.

Although the present invention has been described and illustrated in detail, it is clearly understood that the same is by way of illustration and example only and is not to be taken by way of limitation, the scope of the present invention being limited only by the terms of the appended claims and their equivalents.

### Java ™ Card ™ Runtime Environment (JCRE)

### 2.1 Specification

### Draft 2

Sun Microsystems, Inc.
901 San Antonio Road
Palo Alto, CA 94303 USA
650 960-1300
Draft 2, December 14, 1998

Copyright © 1998 Sun Microsystems, Inc.

901 San Antonio Road, Palo Alto, CA 94303 USA

All rights reserved. Copyright in this document is owned by Sun Microsystems, Inc. Sun Microsystems, Inc. (SUN) hereby grants to you at no charge a nonexclusive, nontransferable, worldwide, limited license (without the right to sublicense) under SUN's intellectual property rights that are essential to practice the Java **™** Card ™ Runtime Environment (JCRE) 2. Specification ("Specification") to use the Specification for internal evaluation purposes only. Other than this limited license, you acquire no right title, or interest in or to the Specification and you shall have no right to use the Specification for productive or commercial use.

### RESTRICTED RIGHTS LEGEND

Use, duplication, or disclosure by the U.S. Government is subject to restrictions of FAR 52.227-14(g)(2)(6/87) and FAR 52.227-19(6/87), or DFAR 252.227-7015(b)(6/95) and DFAR 227.7202-1(a).

SUN MAKES NO REPRESENTATIONS OR WARRANTIES ABOUT THE SUITABILITY OF THE SOFTWARE. EITHER EXPRESS OR IMPLIED, INCLUDING BUT NOT LIMITED TO THE IMPLIED WARRANTIES OF MERCHANTABILITY, FITNESS FOR A PARTICULAR PURPOSE, OR NON-INFRINGEMENT, SUN SHALL NOT BE LIABLE FOR ANY DAMAGES SUFFERED BY LICENSEE AS A RESULT OF USING, MODIFYING OR DISTRIBUTING THIS SOFTWARE OR ITS DERIVATIVES.

### TRADEMARKS

Sun, the Sun logo, Sun Microsystems, JavaSoft, JavaBeans, JDK, Java, Java Card, HotJava, HotJava Views, Visual Java, Solaris, NEO, Joe, Netra, NFS, ONC, ONC+, Open Windows, PC-NFS, EmbeddedJava, PersonalJava, SNM, SunNet Manager, Solaris sunburst design, Solstice, SunCore, SolarNet, SunWeb, Sun Workstation. The Network Is The Computer, ToolTalk, Ultra, Ultracomputing, Ultraserver, Where The Network Is Going, Sun Workshop, XView, Java Workshop, the Java Coffee Cup logo, and Visual Java are trademarks or registered trademarks of Sun Microsystems, Inc. in the United States and other countries.

THIS PUBLICATION IS PROVIDED "AS IS" WITHOUT WARRANTY OF ANY KIND, EITHER EXPRESS OR IMPLIED, INCLUDING, BUT NOT LIMITED TO, THE IMPLIED WARRANTIES OF MERCHANTABILITY, FITNESS FOR A PARTICULAR PURPOSE, OR NON-INFRINGEMENT.

THIS PUBLICATION COULD INCLUDE TECHNICAL INACCURACIES OR TYPOGRAPHICAL ERRORS. CHANGES ARE PERIODICALLY ADDED TO THE INFORMATION HEREIN; THESE CHANGES WILL BE INCORPORATED IN NEW EDITIONS OF THE PUBLICATION. SUN MICROSYSTEMS, INC. MAY MAKE IMPROVEMENTS AND/OR CHANGES IN THE PRODUCT(S) AND/OR THE PROGRAM(S) DESCRIBED IN THIS PUBLICATION AT ANY TIME.

### Java™ Card™ Runtime Environment (JCRE) 2.1 Specification

| Contents | | | | |
|---|---|---|---|---|
| **Preface** | | | | **vi** |
| **1.** | **Introduction** | | | **1-1** |
| | **2. Lifetime of the Java Card Virtual Machine** | | | **2-1** |
| **3.** | **Java Card Applet Lifetime** | | | **3-1** |
| | 3.1 | The Method install | | 3-1 |
| | 3.2 | The Method select | | 3-2 |
| | 3.3 | The Method process | | 3-2 |
| | 3.4 | The Method deselect | | 3-3 |
| | 3.5 | Power Loss and Reset | | 3-3 |
| **4.** | **Transient Objects** | | | **4-1** |
| | 4.1 | Events That Clear Transient Objects | | 4-2 |
| **5.** | **Selection** | | | **5-1** |
| | 5.1 | The Default Applet | | 5-1 |
| | 5.2 | SELECT Command Processing | | 5-2 |
| | 5.3 | Non-SELECr Command Processing | | 5-3 |
| **6.** | **Applet Isolation and Object Sharing.....** | | | **6-1** |
| | 6.1 | Applet Firewall | | 6-1 |
| | | 6.1.1 | Contexts and Context Switching | 6-1 |
| | | 6.1.2 | Object Ownership | 6-2 |
| | | 6.13 | Object Access | 6-2 |
| | | 6.1.4 | Firewall Protection | 6-2 |
| | | 6.1.5 | Static Fields and Methods | 6-3 |
| | 6.2 | Object Access Across Contexts | | 6-3 |
| | | 6.2.1 | JCRE Entry Point Objects | 6-4 |
| | | 6.2.2 | Global Arrays | 6-4 |
| | | 6.2.3 | JCRE Privileges | 6-5 |
| | | 6.2.4 | Shareable Interfaces | 6-5 |
| | | 6.2.5 | Determining the Previous Context | 6-6 |
| | | 6.2.6 | Shareable Interface Details | 6-7 |
| | | 6.2.7 | Obtaining Shareable Interface Objects | 6-7 |
| | | 6.2.8 | Object Access Behavior | 6-8 |
| | 6.3 | Transient Objects and Applet contexts | | 6-12 |
| **7.** | **Transactions and Atomicity** | | | **7-1** |
| | 7.1 | Atomicity | | 7-1 |
| | 7.2 | Transactions | | 7-1 |
| | 7.3 | Transaction Duration | | 7-2 |
| | 7.4 | Nested Transactions | | 7-2 |
| | 7.5 | Tear or Reset Transaction Failure | | 7-2 |
| | 7.6 | Aborting a Transaction | | 7-3 |
| | | 7.6.1 | Programmatic Abortion | 7-3 |
| | | 7.6.2 | Abortion by the JCRE | 7-3 |
| | | 7.6.3 | Cleanup Responsibilities of the JCRE | 7-3 |
| | 7.7 | Transient Objects | | 7-3 |
| | 7.8 | Commit Capacity | | 7-3 |
| **8.** | **API Topics** | | | **8-1** |
| | 8.1 | The APDU Class | | 8-1 |
| | | 8.1.1 | T=0 specifics for outgoing data transfers | 8-1 |
| | | 8.1.2 | T=1 specifics for outgoing data transfers | 8-3 |
| | 8.2 | The security and crypto packages | | 8-4 |
| | 8.3 | JCSystem Class | | 8-5 |
| **9.** | **Virtual Machine Topics** | | | **9-1** |
| | 9.1 | Resource Failures | | 9-1 |
| **10.** | **Applet Installer** | | | **10-1** |
| | 10.1 | The Installer | | 10-1 |
| | | 10.1.1 | Installer Implementation | 10-1 |
| | | 10.1.2 | Installer AID | 10-2 |
| | | 10.1.3 | Installer APDUs | 10-2 |
| | | 10.1.4 | Installer Behavior | 10-2 |
| | | 10.1.5 | Installer Privileges | 10-3 |
| | 10.2 | The Newly Installed Applet | | 10-3 |
| | | 10.2.1 | Installation Parameters | 10-3 |
| **11.** | **API Constants** | | | **1** |

### Preface

Java™ Card™ technology combines a portion of the Java programming language with a runtime environment optimized for smart cards and related, small-memory embedded devices. The goal of Java Card technology is to bring many of the benefits of Java software programming to the resource-constrained world of smart cards.

This document is a specification of the Java Card Runtime Environment (JCRE) 2. 1. A vendor of a Java Card-enabled device provides an implementation of the JCRE. A JCRE implementation within the context of this specification refers to a vendor's implementation of the Java Card Virtual Machine (VM), the Java Card Application Programming Interface (API), or other component, based on the Java Card technology specifications. A *Reference Implementation* is an implementation produced by Sun Microsystems, Inc. Applets written for the Java Card platform are referred to as Java Card applets.

### Who Should Use This Specification?

This specification is intended to assist JCRE implementers in creating an implementation, developing a specification to extend the Java Card technology specifications, or in creating an extension to the Java Card Runtime Environment (JCRE). This specification is also intended for Java Card applet developers who want a greater understanding of the Java Card technology specifications.

### Before You Read This Specification

Before reading this guide, you should be familiar with the Java programming language, the Java Card technology specifications, and smart card technology. A good resource for becoming familiar with Java technology and Java Card technology is the Sun Microsystems, Inc. website, located at: http://java.sun.com.

### How This Specification Is Organized

Chapter 1, "The Scope and Responsibilities of the JCRE," gives an overview of the services required of a JCRE implementation.

Chapter 2, "Lifetime of the Virtual Machine," defines the lifetime of the Virtual Machine.

Chapter 3, "Applet Lifetime," defines the lifetime of an applet.

Chapter 4, "Trasient Objects," provides an overview of transient objects.

Chapter 5, "Selection," describes how the JCRE handles applet selection.

Chapter 6, "Applet Isolation and Object Sharing," describes applet isolation and object sharing.

Chapter 7, "Transactions and Atomicity," provides an overview of atomicity during transactions.

Chapter 8, "API Topics," describes API functionality required of a JCRE but not completely specified in the Java Card 2.1 API Specification.

Chapter 9, "Virtual Machine Topics." describes virtual machine specifics.

Chapter 10, "Applet Installer," provides an overview of the Applet Installer.

Chapter 11, "API Constants," provides the numeric value of constants that are not specified in the Java Card API 2.1 Specification.

Glossary is a list of words and their definitions to assist you in using this book.

### Related Documents and Publications

References to various documents or products are made in this manual. You should have the following documents available:
■ Java Card 2.1 API Draft 2 Specification, Sun Microsystems. Inc.
■ Java Card 2.0 Language Subset and Virtual Machine Specification, October 13, 1997, Revision 1.0 Final, Sun Microsystems, Inc.
■ Java Card Applet Developer's Guide, Sun Microsystems, Inc.
■ The Java Language Specification by James Gosling, Bill Joy, and Guy L Steele. Addison-Wesley, 1996, ISBN 0-201-63451-1.
■ The Java Virtual Machine Specification (Java Series) by Tim Lindholm and Frank Yellin. Addison-Wesley. 1996, ISBN 0-201-63452-X.
■ The Java Class Libraries: An Annotated Reference (Java Series) by Patrick Chan and Rosanna Lee. Addison-Wesley, two volumes, ISBN: 0201310023 and 0201310031.
■ ISO 7816 Specification Parts 1-6.
■ EMV '96 Integrated Circuit Card Specification for Payment Systems.

### 1. Introduction

The Java Card Runtime Environment (JCRE) 2.1 contains the Java Card Virtual Machine (VM), the Java Card Application Programming Interface (API) classes (and industry-specific extensions), and support services.

This document, the JCRE 2.1 Specification, specifies the JCRE functionality required by the Java Card technology. Any implementation of Java Card technology shall provide this necessary behavior and environment.

### 2. Lifetime of the Java Card Virtual Machine

In a PC or workstation, the Java Virtual Machine runs as an operating system process. When the OS process is terminated, the Java applications and their objects are automatically destroyed.

In Java Card technology the execution lifetime of the Virtual Machine (VM) is the lifetime of the card. Most of the information stored on a card shall be preserved even when power is removed from the card. Persistent memory technology (such as EEPROM) enables a smart card to store information when power is removed. Since the VM and the objects created on the card are used to represent application information that is persistent, the Java Card VM appears to run forever. When power is removed, the VM stops only temporarily. When the card is next reset, the VM starts up again and recovers its previous object heap from persistent storage.

Aside from its persistent nature, the Java Card Virtual Machine is just like the Java Virtual Machine.

The card initialization time is the time after masking, and prior to the time of card personalization and issuance. At the time of card initialization, the JCRE is initialized. The framework objects created by the JCRE exist for the lifetime of the Virtual Machine. Because the execution lifetime of the Virtual Machine and the JCRE framework span CAD sessions of the card, the lifetimes of objects created by applets will also span CAD sessions. (CAD means Card Acceptance Device, or card reader. Card sessions are those periods when the card is inserted in the CAD, powered up, and exchanging streams of APDUs with the CAD. The card session ends when the card is removed from the CAD.) Objects that have this property are called persistent objects.

The JCRE implementer shall make an object persistent when:
- The Applet. register method is called. The JCRE stores a reference to the instance of the applet object. The JCRE imptementer shall ensure that instances of class applet are persistent.
- A reference to an object is stored in a field of any other persistent object or in a class's static field. This requirement stems from the need to preserve the integrity of the JCRE's internal data structures.

### 3. Java Card Applet Lifetime

For the purposes of this specification, a Java Card applet's lifetime begins at the point that it has been correctly loaded into card memory, linked, and otherwise prepared for execution. (For the remainder of this specification. *applet* refers to an applet written for the Java Card platform.) Applets registered with the Applet. register method exist for the lifetime of the card. The JCRE interacts with the applet via the applet's public methods install, select, deselect, and process. An applet shall implement the static install method. If the install method is not implemented, the applet's objects cannot be created or initialized. A JCRE implementation shall call an applet's install, select, deselect, and process methods as described below.

When the applet is installed on the smart card, the static install method is called once by the JCRE for each applet instance created. The JCRE shall not call the applet's constructor directly.

### 3.1 The Method install

When install is called, no objects of the applet exist. The main task of the install method within the applet is to create an instance of the Applet class, and to register the instance. All other objects that the applet will need during its lifetime can be created as is feasible. Any other preparations necessary for the applet to be selected and accessed by a CAD also can be done as is feasible. The install method obtains initialization parameters from the contents of the incoming byte array parameter.

Typically, an applet creates various objects, initializes them with predefined values, sets some internal state variables, and calls the Applet, register method to specify the AID (applet IDentifier as defined in ISO 7816-5) to be used to select it. This installation is considered successful when the call to the

Applet. register method completes without an exception. The installation is deemed unsuccessful if the install method does not call the Applet. register method, or if an exception is thrown from within the install method prior to the Applet. register method being called, or if the Applet. register method throws an exception. If the installation is unsuccessful, the JCRE shall perform all cleanup when it regains control. That is, all persistent objects shall be returned to the state they had prior to calling the install method. If the installation is successful, the JCRE can mark the applet as available for selection.

### 3.2 The Method select

Applets remain in a suspended state until they are explicitly selected. Selection occurs when the JCRE receives a SELECT APDU in which the name data matches the AID of the applet. Selection causes an applet to become the currently selected applet.

Prior to calling SELECT, the JCRE shall deselect the previously selected applet. The JCRE indicates this to the applet by invoking the applet's deselect method.

The JCRE informs the applet of selection by invoking its select method.

The applet may decline to be selected by returning false from the call to the select method or by throwing an exception. If the applet returns true, the actual SELECT APDU command is supplied to the applet in the subsequent call to its process method, so that the applet can examine the APDU contents. The applet can process the SELECT APDU command exactly like it processes any other APDU command. It can respond to the SELECT APDU with data (see the process method for details), or it can flag errors by throwing an ISOException with the appropriate SW (returned status word). The SW and optional response data are returned to the CAD.

The Applet.selectingApplet method shall return true when called during the select method. The Applet.selectingApplet method will continue to return true during the subsequent process method, which is called to process the SELECT APDU command.

If the applet declines to be selected, the JCRE will return an APDU response status word of ISO.SW_APPLET_SELECT_FAILED to the CAD. Upon selection failure, the JCRE state is set to indicate that no applet is selected.

After successful selection, all subsequent APDUs are delivered to the currently selected applet via the process method.

### 3.3 The Method process

All APDUs are received by the JCRE, which passes an instance of the APDU class to the process method of the currently selected applet.

Note - A SELECT APDU might cause a change in the currently selected applet prior to the call to the process method.

On normal return, the JCRE automatically appends 0x9000 as the completion response SW to any data already sent by the applet.

At any time during process, the applet may throw an ISOException with an appropriate SW, in which case the JCRE catches the exception and returns the SW to the CAD.

If any other exception is thrown during process, the JCRE catches the exception and returns the status word ISO7816.SW_UNKNOWN to the CAD.

### 3.4 The Method deselect

When the JCRE receives a SELECT APDU command in which the name matches the AID of an applet, the JCRE calls the DESELECT method of the currently selected applet. This allows the applet to perform any cleanup operations that may be required in order to allow some other applet to execute.

The Applet.selectingApplet method shall return false when called during the deselect method. Exceptions thrown by the deselect method are caught by the JCRE, but the applet is deselected.

### 3.5 Power Loss and Reset

Power loss occurs when the card is withdrawn from the CAD or if there is some other mechanical or electrical failure. When power is reapplied to the card and on Card Reset (warm or cold) the JCRE shall ensure that:
- Transient data is reset to the default value.
- The transaction in progress, if any, when power was lost (or reset occurred) is aborted.
- The applet that was selected when power was lost (or reset occurred) becomes implicitly deselected. (In this case the deselect method is not called.)
- If the JCRE implements default applet selection (see paragraph 5.1), the default applet is selected as the currently selected applet, and that the default applet's select method is called. Otherwise, the JCRE sets its state to indicate that no applet is selected.

### 4. Transient Objects

Applets sometimes require objects that contain temporary (transient) data that need not be persistent across CAD sessions. Java Card does not support the Java keyword transient. However, Java Card technology provides methods to create transient arrays with primitive components or references to object.

The term "transient object" is a misnomer. It can be incorrectly interpreted to mean that the object itself is transient. However, only the *contents* of the fields of the object (except for the length field) have a transient nature. As with any other object in the Java programming language, transient objects within the Java Card platform exist as long as they are referenced from:
- The stack
- Local variables
- A class static field
- A field in another existing object

A transient object within the Java Card platform has the following required behavior:
- The fields of a transient object shall be *cleared* to the field's default value (zero, false, or null) at the occurrence of certain events (see below).
- For security reasons, the fields of a transient object shall never be stored in a "persistent memory technology." Using current smart card technology as an example, the contents of transient objects can be stored in RAM, but never in EEPROM. The purpose of this requirement is to allow transient objects to be used to store session keys.
- Writes to the fields of a transient object shall not have a performance penalty. (Using current smart card technology as an example, the contents of transient objects can be stored in RAM, while the contents of non-transient objects can be stored in EEPROM. Typically, RAM technology has a much faster write cycle time than EEPROM.)
- Writes to the fields of a transient object shall not be affected by "transactions." That is, an abortTransaction will never cause a field in a transient object to be restored to a previous value.

This behavior make transient objects ideal for small amounts of temporary applet data that is frequently modified, but that need not be preserved across CAD or select sessions.

### 4.1 Events That Clear Transient Objects

Persistent objects are used for maintaining states that shall be preserved across card resets. When a transient object is created, one of two events are specified that cause its fields to be cleared. CLEAR_ON_RESET transient objects are used for maintaining states that shall be preserved across applet selections, but not across card resets. CLEAR_ON_DESELECT transient objects are used for maintaining states that must be preserved white an applet is selected, but not across applet selections or card resets.

Details of the two clear events are as follows:
- CLEAR_ON_RESET--the object's fields are cleared when the card is reset. When a card is powered on, this also causes a card reset.
   Note - It is not necessary to clear the fields of transient objects before power is removed from a card. However, it is necessary to guarantee that the previous contents of such fields cannot be recovered once power is lost.
- CLEAR_ON_DESELECT--the object's fields are cleared whenever any applet is deselected. Because a card reset implicitly deselects the currently selected applet, the fields of CLEAR_ON_DESELECT objects are also cleared by the same events specified for CLEAR_ON_RESET.

The currently selected applet is explicitly deselected (its deselect method is called) only when a SELECT command is processed. The currently selected applet is deselected and then the fields of all CLEAR_ON_DESELECT transient objects are cleared regardless of whether the SELECT command:
- Fails to select an applet.
- Selects a different applet.
- Reselects the same applet.

### 5. Selection

Cards receive requests for service from the CAD in the form of APDUs. The SELECT APDU is used by the JCRE to designate a *currently selected applet*. Once selected, an applet receives all subsequent APDUs until the applet becomes deselected.

There is no currently selected applet when either of the following occurs:
- The card is reset and no applet has been pre-designated as the *default applet*.
- A SELECT command fails when attempting to select an applet.

### 5.1 The Default Applet

Normally, applets become selected only via a successful SELECT command. However, some smart card CAD applications require that there be a default applet that is implicitly selected after every card reset. The behavior is:
1. After card reset (or power on, which is a form of reset) the JCRE performs its initializations and checks to see if its internal state indicates that a particular applet is the default applet. If so, the JCRE makes this applet the currently selected applet, and the applet's select method is called. If the applet's select method throws an exception or returns false, then the JCRE sets its state to indicate that no applet is selected. (The applet's process method is not called during default applet selection because there is no SELECT APDU.) When a default applet is selected at card reset, it shall not require its process method to be called.
2. The JCRE ensures that the ATR has been sent and the card is now ready to accept APDU commands.

If a default applet was successfully selected, then APDU commands can be sent directly to this applet If a default applet was not selected, then only SELECT commands can be processed.

The mechanism for specifying a default applet is not defined in the Java Card API 2.1. It is a JCRE implementation detail and is left to the individual JCRE implementers.

### 5.2 SELECT Command Processing

The SELECT APDU command is used to select an applet. Its behavior is:
1. The SELECT APDU is always processed by the JCRE regardless of which, if any, applet is active.
2. The JCRE searches its internal table for a matching AID. The JCRE shall support selecting an applet where the full AID is present in the SELECT command.
   JCRE implementers are free to enhance their JCRE to support other selection criterion. An example of this is selection via partial AID match as specified in ISO 7816-4. The specific requirements are as follows:
   Note - An asterisk indicates binary bit numbering as in ISO7816. Most significant bit = b8. Least significant bit = b1.
   a) Applet SELECT command uses CLA=0x00, INS=0xA4.
   b) Applet SELECT command uses "Selection by DF name". Therefore, P1=0x04.
   c) Any other value of P1 implies that is not an applet select. The APDU is procassed by the currently selected applet.
   d) JCRE shall support exact DF name (AID) selection i.e P2=%b0000 xx00. (b4,b3* are don't care).
   c) All other partial DF name SELECT options (b2,b1*) are JCRE implementation dependent.
   f) All file control information option codes (b4,b3*) shall be supported by the JCRE and interpreted and processed by the applet.
3. If no AID match is found:
   a. If there is no currently selected applet, the JCRE responds to the SELECT command with status code 0x6999 (SW_APPLET_SELECT_FAILED).
   b. Otherwise, the SELECT command is forwarded to the currently selected applet's process method. A context switch into the applet's context occurs at this point. (The applet context is defined in paragraph 6.1.1.) Applets may use the SELECT APDU command for their own internal SELECT processing.
4. If a matching AID is found, the JCRE prepares to select the new applet. If there is an currently selected applet, it is deselected via a call to its deselect method. A context switch into the deselected applet's context occurs at this point. The JCRE context is restored upon exit from deselect.
S. The JCRE sets the new currently selected applet. The new applet is selected via a call to its select method, and a context switch into the new applet's context occurs.
   a. If the applet's select method throws an exception or returns false, then JCRE state is set so that no applet is selected. The JCRE responds to the SELECT command with status code 0x6999 (SW_APPLET_SELECT_FAILED).
   b. The new currently selected applet's process method is then called with the SELECT APDU as an input parameter. A context switch into the applet's context occurs.

Notes -

If there is no matching AID, the SELECT command is forwarded to the currently selected applet (if any) for processing as a normal applet APDU command.

If there is a matching AID and the SELECT command fails, the JCRE always enters the state where no applet is selected.

If the matching AID is the same as the currently selected applet, the JCRE still goes through the process of deselecting the applet and then selecting it. Reselection could fail, leaving the card in a state where no applet is selected.

### 5.3 Non-SELECT Command Processing

When a non-SELECT APDU is received and there is no currently selected applet, the JCRE shall respond to the APDU with status code 0x6999 (SW_APPLET_SELECT_FAILED).

When a non-SELECT APDU is received and there is a currently selected applet, the JCRE invokes the proces s method of the currently selected applet passing the APDU as a parameter. This causes a context switch from the JCRE context into the currently selected applet's context. When the process method exits, the VM switches back to the JCRE context. The JCRE sends a response APDU and waits for the next command APDU.

### 6. Applet Isolation and Object Sharing

Any implementation of the JCRE shall support isolation of contexts and applets. Isolation means that one applet can not access the fields or objects of an applet in another context unless the other applet explicitly provides an interface for access. The JCRE mechanisms for applet isolation and object sharing are detailed in the sections below.

### 6.1 Applet Firewall

The *applet firewall* within Java Card technology is runtime-enforced protection and is separate from the Java technology protections. The Java language protections still apply to Java Card applets. The Java language ensures that strong typing and protection attributes are enforced.

Applet firewalls are always enforced in the Java Card VM. They allow the VM to automatically perform additional security checks at runtime.

### 6.1.1 Contexts and Context Switching

Firewalls essentially partition the Java Card platform's object system into separate protected object spaces called *contexts*. The firewall is the boundary between one context and another. The JCRE shall allocate and manage an *applet context* for each applet that is installed on the card. (But see paragraph 6.1.1.2 below for a discussion of group contexts.)

In addition, the JCRE maintains its own *JCRE context*. This context is much like an applet context, but it has special system privileges so that it can perform operations that are denied to applet contexts.

At any point in time, there is only one *active context* within the VM. (This is called the *currently active context*.) All bytecodes that access objects are checked at *runtime* against the currently active context in order to determine if the access is allowed. A java. lang. SecurityException is thrown when an access is disallowed.

When certain well-defined conditions are met during the execution of invoke-type bytecodes as described in paragraph 6.2.8, the VM performs a *context switch*. The previous context is pushed on an internal VM stack, a new context becomes the currently active context, and the invoked method executes in this new context. Upon exit from that method the VM performs a restoring context switch. The original context (of the caller of the method) is popped from the stack and is restored as the currently active context. Context switches can be nested. The maximum depth depends on the amount of VM stack space available.

Most method invocations in Java Card technology do not cause a context switch. Context switches only occur during invocation of and return from certain methods, as well as during exception exits from those methods (see 6.2.8).

During a context-switching method invocation, an additional piece of data, indicating the currently active context, is pushed onto the return stack. This context is restored when the method is exited.

Further details of contexts and context switching are provided in later sections of this chapter.

### 6.1.1.1 Group Contexts

Usually, each instance of a Java Card applet defines a separate context. But with Java Card 2.1 technology, the concept of *group context* is introduced. If more than one applet is contained in a single Java package, they share the same context. Additionally, all instances of the same applet class share the same context. In other words, there is no firewall between two applet instances in a group context.

The discussion of contexts and context switching above in section 6.1.1 assumes that each applet instance is associated with a separate context. In Java Card 2.1 technology, contexts are compared to enforce the firewall, and the instance AID is pushed onto the stack. Additionally, this happens not only when the context switches, but also when control switches from an object owned by one applet instance to an object owned by another instance within the same package.

### 6.1.2 Object Ownership

When a new object is created, it is associated with the currently active context. But the object is *owned* by the applet instance within the currently active context when the object is instantiated. An object is owned by an applet instance, or by the JCRE.

### 6.1.3 Object Access

In general, an object can only be *accessed* by its owning context, that is, when the owning context is the currently active context. The firewall prevents an_object from being accessed by another applet in a different context.

In implementation terms, each time an object is accessed, the object's owner context is compared to the currently active context. If these do not match, the access is not performed and a SecurityException is thrown.

An object is accessed when one of the following bytecodes is executed using the object's reference:
getfield, putfield, invokevirtual, invokeinterface,
athrow, <T>aload, <T>astore, arraylength, checkcast, instanceof

<T> refers to the various types of array bytecodes, such as baload, sastore, etc.

This list includes any special or optimized forms of these bytecodes implemented in the Java Card VM, such as getfield_b, sgetfield_s_this, etc.

### 6.1.4 Firewall Protection

The Java Card firewall provides protection against the most frequently anticipated security concern: developer mistakes and design oversights that might allow sensitive data to be "leaked" to another applet. An applet may be able to obtain an object reference from a publicly accessible location, but if the object is owned by a different applet, the firewall ensures security.

The firewall also provides protection against incorrect code. If incorrect code is loaded onto a card, the firewall still protects objects from being accessed by this code.

The Java Card API 2.1 specifies the basic minimum protection requirements of contexts and firewalls because these features shall be supported in ways that are not transparent to the apples developer. Developers shall be aware of the behavior of objects, APIs, and exceptions related to the firewall.

JCRE implementers are free to implement additional security mechanisms beyond those of the applet firewall, as long as these mechanisms are transparent to applets and do not change the externally visible operation of the VM.

### 6.1.5 Static Fields and Methods

It should also be noted that classes are not owned by contexts. There is no runtime context check that can be performed when a class static field is accessed. Neither is there a context switch when a static method is invoked. (Similarly, invokespecial causes no context switch.)

Public static fields and public static methods are accessible from any context: static methods execute in the same context as their caller.

Objects referenced in static fields are just regular objects. They are owned by whomever created them and standard firewall access rules apply. If it is necessary to share them across multiple applet contexts, then these objects need to be *Shareable Interface Objects* (SIOs). (See paragraph 6.2.4 below.)

Of course, the conventional Java technology protections are still enforced for static fields and methods. In addition, when applets are installed, the Installer verifies that each attempt to link to an external static field or method is permitted. Installation and specifics about linkage are beyond the scope of this specification.

### 6.1.5.1 Optional static access checks

The JCRE may perform optional runtime checks that are redundant with the constraints enforced by a verifier. A Java Card VM may detect when code violates fundamental language restrictions, such as invoking a private method in another class, and report or otherwise address the violation.

### 6.2 Object Access Across Contexts

To enable applets to interact with each other and with the JCRE, some well-defined yet secure mechanisms are provided so one context can access an object belonging to another context.

These mechanisms are provided in the Java Card API 2.1 and are discussed in the following sections:
- JCRE Entry Point Objects
- Global Arrays
- JCRE Privileges
- Shareable interfaces

### 6.2.1 JCRE Entry Point Objects

Secure computer systems shall have a way for non-privileged user processes (that are restricted to a subset of resources) to request system services performed by privileged "system" routines.

In the Java Card API 2. 1, this is accomplished using *JCRE Entry Point Objects*. These are objects owned by the JCRE context, but they have been flagged as containing entry point methods.

The firewall protects these objects from access by applets. The entry point designation allows the methods of these objects to be invoked from any context. When that occurs, a context switch to the JCRE context is performed. These methods are the gateways through which applets request privileged JCRE system services.

There are two categories of JCRE Entry Point Objects :
- Temporary JCRE Entry Point Objects
   Like all JCRE Entry Point Objects, methods of temporary JCRE Entry Point Objects can be invoked from any applet context. However, references to these objects cannot be stored in class variables, instance variables or array components. The JCRE detects and restricts attempts to store references to these objects as part of the firewall functionality to prevent unauthorized re-use.
   The APDU object and all JCRE owned exception objects are examples of temporary JCRE Entry Point Objects.
- Permanent JCRE Entry Point Objects
   Like all JCRE Entry Point Objects, methods of permanent JCRE Entry Point Objects can be invoked from any applet context. Additionally, references to these objects can be stored and freely reused.
   JCRE owned AID instances are examples of permanent JCRE Entry Point Objects.

The JCRE is responsible for:
- Determining what privileged services are provided to applets.
- Defining classes containing the entry point methods for those services.
- Creating one or more object instances of those classes.
- Designating those instances as JCRE Entry Point Objects.
- Designating JCRE Entry Point Objects as temporary or permanent.
- Making references to those objects available to applets as needed.

Note - Only the *methods* of these objects are accessible through the firewall. The fields of these objects are still protected by the firewall and can only be accessed by the JCRE context.

Only the JCRE itself can designate Entry Point Objects and whether they are temporary or permanent. JCRE imptementers are responsible for implementing the mechanism by which JCRE Entry Point Objects are designated and how they become temporary or permanent.

### 6.2.2 Global Arrays

The global nature of some objects requires that they be accessible from any applet context. The firewall would ordinarily prevent these objects from being used in a flexible manner. The Java Card VM allows an object to be designated as *global*.

All global arrays are temporary global array objects. These objects are owned by the JCRE context, but can be accessed from any applet context. However, references to these objects cannot be stored in class variables. instance variables or array components. The JCRE detects and restricts attempts to store references to these objects as part of the firewall functionality to prevent unauthorized re-use.

For added security, only arrays can be designated as global and only the JCRE itself can designate global arrays. Because applets cannot create them. no AP1 methods are defined. JCRE implementers are responsible for implementing the mechanism by which global arrays are designated.

At the time of publication of this specification, the only global arrays required in the Java Card AP1 2.1 are the APDU buffer and the byte array input parameter (bArray) to the applet's install method.

Note - Because of its global status, the API specifies that the APDU buffer is cleared to zeroes whenever an applet is selected, before the JCRE accepts a new APDU command. This is to prevent an applet's potentially sensitive data from being "leaked" to another applet via the global APDU buffer. The APDU buffer can be accessed from a shared interface object context and is suitable for passing data across applet contexts. The applet is responsible for protecting secret data that may be accessed from the APDU buffer.

### 6.2.3 JCRE Privileges

Because it is the "system" context, the JCRE context has a special privilege. It can invoke a method of any object on the card. For example, assume that object X is owned by applet A. Normally, only context A can access the fields and methods ofX. But the JCRE context is allowed to invoke any of the methods of X. During such an invocation, a context switch occurs from the JCRE context to the applet context that owns X.

Note - The JCRE can access both *methods* and *fields* of X. Method access is the mechanism by which the JCRE enters an applet context. Although the JCRE could invoke any method through the firewall, it shall only invoke the select, process, deselect, and getShareableInterfaceObject (see 6.2.7.1) methods defined in the Applet class.

The JCRE context is the currently active context when the VM begins running after a card reset. The JCRE context is the "root" context and is always either the currently active context or the bottom context saved on the stack.

### 6.2.4 Shareable Interfaces

*Shareable interfaces* are a new feature in the Java Card API 2.1 to enable applet interaction. A shareable interface defines a set of shared interface methods. These interface methods can be invoked from one applet context even if the object implementing them is owned by another applet context.

In this specification, an object instance of a class implementing a shareable interface is called a *Shareable Interface Object (SIO)*.

To the owning context, the SIO is a normal object whose fields and methods can be accessed. To any other context, the SIO is an instance of the shareable interface, and only the methods defined in the shareable interface are accessible. All other fields and methods of the SIO are protected by the firewall.

Shareable interfaces provide a secure mechanism for inter-applet communication, as follows:
1. To make an object available to another applet, applet A first defines a shareable interface, SI. A shareable interface extends the interface javacard. framework. Shareable. The methods defined in the shareable interface, SI, represent the services that applet A makes accessible to other applets.
2. Applet A then defines a class C that implements the shareable interface SI. C implements the methods defined in SI. C may also define other methods and fields, but these are protected by the applet firewall. Only the methods defined in SI are accessible to other applets.
3. Applet A creates an object instance O of class C. O belongs to applet A, and the firewall allows A to access any of the fields and methods of O.
4. To access applet A's object O, applet B creates an object reference SIO of type SI.
5. Applet B invokes a special method (JCSystem.getAppletShareableInterfaceObject, described in paragraph 6.2.7.2) to request a shared interface object reference from applet A.
6. Applet A receives the request and the AID of the requester (B) via Applet.getShareableInterfaceObject, and determines whether or not it will share object O with applet B.
7. If applet A agrees to share with applet B, A responds to the request with a reference to O. This reference is cast to type Shareable so that none of the fields or methods of O are visible.
8. Applet B receives the object reference from applet A, casts it to type SI, and stores it in object reference SIO. Even though SIO actually refers to A's object O, SIO is of type SI. Only the shareable interface methods defined in SI are visible to B. The firewall prevents the other fields and methods of O from being accessed by B.
9. Applet B can request service from applet A by invoking one of the shareable interface methods of SIO. During the invocation the Java Card VM performs a context switch. The original currently active context (B) is saved on a stack and the context of the owner (A) of the actual object (O) becomes the new currently active context. A's implementation of the shareable interface method (SI method) executes in A's context.
10. The SI method can find out the AID of its client (B) via the JCSystem. getPreviousContextAID method. This is described in paragraph 6.2.5. The method determines whether or not it will perform the service for applet B.
11. Because of the context switch, the firewall allows the SI method to access all the fields and methods of object O and any other object owned by A. At the same time, the firewall prevents the method from accessing non-shared objects owned by B.
12. The SI method can access the parameters passed by B and can provide a return value to B.
13. During the return, the Java Card VM performs a restoring context switch. The original currently active context (B) is popped from the stack, and again becomes the current context.
14. Because of the context switch, the firewall again allows B to access any of its objects and prevents B from accessing non-shared objects owned by A.

### 6.2.5 Determining the Previous Context

When an applet calls JCSystem.getPreviousContextAID, the JCRE shall return the instance AID of the applet instance active at the time of the last context switch.

### 6.2.5.1 The JCRE Context

The JCRE context does not have an AID. If an applet calls the getPreviousContextAID method when the applet context was entered directly from the JCRE context, this method returns null.

If the applet calls getPreviousContextAID from a method that may be accessed either from within the applet itself or when accessed via a shareable interface from an external applet, it shall check for null return before performing caller AID authentication.

### 6.2.6 Shareable Interface Details

A shareable interface is simply one that extends (either directly or indirectly) the *tagging* interface j avacard.framework. Shareable. This Shareable interface is similar in concept to the Remote interface used by the RMI facility, in which calls to the interface methods take place across a local/remote boundary.

### 6.2.6.1 The Java Card Shareable Interface

Interfaces extending the Shareable tagging interface have this special property: calls to the interface methods take place across Java Card's applet firewall boundary via a context switch.

The Shareable interface serves to identify all shared objects. Any object that needs to be shared through the applet firewall shall directly or indirectly implement this interface. Only those methods specified in a shareable interface are available through the firewall.

Implementation classes can implement any number of shareable interfaces and can extend other shareable implementation classes.

Like any Java platform interface, a shareable interface simply defines a set of service methods. A service provider class declares that it "implements" the shareable interface and provides implementations for each of the service methods of the interface. A service client class accesses the services by obtaining an object reference, casting it to the shareable interface type if necessary, and invoking the service methods of the interface.

The shareable interfaces within the Java Card technology shall have the following properties:
- When a method in a shareable interface is invoked, a context switch occurs to the context of the object's owner.
- When the method exits, the context of the caller is restored.
- Exception handling is enhanced so that the currently active context is correctly restored during the stack frame unwinding that occurs as an exception is thrown.

### 6.2.7 Obtaining Shareable Interface Objects

Inter-applet communication is accomplished when a client applet invokes a shareable interface method of a SIO belonging to a server applet. In order for this to work, there must be a way for the client applet to obtain the SIO from the server applet in the first place. The JCRE provides a mechanism to make this possible. The Applet class and the JCSystem class provide methods to enable a client to request services from the server.

### 6.2.7.1 The Method Applet.getShareableInterfaceObject

This method is implemented by the server applet instance. It shall be called by the JCRE to mediate between a client applet that requests to use an object belonging to another applet, and the server applet that makes its objects available for sharing.

The default behavior shall return null, which indicates that an applet does not participate in inter-applet communication.

A server applet that is intended to be invoked from another applet needs to override this method. This method should examine the clientAID and the parameter. If the clientAID is not one of the expected AIDs, the method should return null. Similarly, if the parameter is not recognized or if it is not allowed for the clientAID, then the method also should return null. Otherwise, the applet should return an SIO of the shareable interface type that the client has requested.

The server applet need not respond with the same SIO to all clients. The server can support multiple types of shared interfaces for different purposes and use clientAID and parameter to determine which kind of SIO to return to the client.

### 6.2.7.2 The Method JCSystem.getAppletShareableInterfaceObject

The JCSystem class contains the method getAppletShareableInterfaceObject, which is invoked by a client applet to communicate with a server applet.

The JCRE shall implement this method to behave as follows:
1. The JCRE searches its internal applet table for one with serverAID. If not found, null is returned.
2. The JCRE invokes this applet's getShareableInterfaceObject method, passing the clientAID of the caller and the parameter.
3. A context switch occurs to the server applet, and its implementation of getShareableInterfaceObject proceeds as described in the previous section. The server applet returns a SIO (or null).
4. getAppletShareableInterfaceObject returns the same SIO (or null) to its caller.

For enhanced security, the implementation shall make it impossible for the client to tell which of the following conditions caused a null value to be returned:
- The serverAID was not found.
- The server applet does not participate in inter-applet communication.
- The server applet does not recognize the clientAID or the parameter.
- The server applet won't communicate with this client.
- The server applet won't communicate with this client as specified by the parameter.

### 6.2.8 Class and Object Access Behavior

A static class field is *accessed* when one of the following Java bytecodes is executed:
getstatic, putstatic
An object is *accessed* when one of the following Java bytecodes is executed using the object's reference:
getfield, putfield, invokevirtual, invokeinterface, athrow,
<T>aload, <T>astore, arraylength, checkcast, instanceof
<T> refers to the various types of array bytecodes, such as baload, sastore, etc.

This list also includes any special or optimized forms of these bytecodes that may be implemented in the Java Card VM, such as getfield_b, sgetfield_s_this, etc.

Prior to performing the work of the bytecode as specified by the Java VM, the Java Card VM will perform an *access check* on the referenced object. If access is denied, then a SecurityException is thrown.

The access checks performed by the Java Card VM depend on the type and owner of the referenced object, the bytecode, and the currently active context. They are described in the following sections.

### 6.2.8.1 Accessing Static Class Fields

Bytecodes:
getstatic, putstatic
   ■ If the JCRE is the currently active context, then access is allowed.
   ■ Otherwise, if the bytecode is putstatic and the field being stored is a reference type and the reference being stored is a reference to a temporary JCRE Entry Point Object or a global array then access is denied.
   ■ Otherwise, access is allowed.

### 6.2.8.2 Accessing Array Objects

Bytecodes:
<T>aload, <T>astore, arraylength, checkcast, instanceof

■ If the JCRE is the currently active context, then access is allowed.
■ Otherwise, if the bytecode is aastore and the component being stored is a reference type and the reference being stored is a reference to a temporary JCRE Entry Point Object or a global array then access is denied.
■ Otherwise, ifthe array is owned by the currently active context, then access is allowed.
■ Otherwise, if the array is designated global, then access is allowed.
■ Otherwise, access is denied.

### 6.2.8.3 Accessing Class Instance Object Fields

Bytecodes:
getfield, putfield

■ If the JCRE is the currently active context, then access is allowed.
■ Otherwise, if the bytecode is putfield and the field being stored is a reference type and the reference being stored is a reference to a temporary JCRE Entry Point Object or a global array then access is denied.
■ Otherwise if the object is owned by the currently active context, then access is allowed.
■ Otherwise, access is denied.

### 6.2.8.4 Accessing Class Instance Object Methods

Bytecodes:
invokevirtual

■ If the object is owned by the currently active context, then access is allowed. Context is switched to the object owner's context.
■ Otherwise, if the object is designated a JCRE Entry Point Object, then access is allowed. Context is switched to the object owner's context (shall be JCRE).
■ Otherwise, if JCRE is the currently active context, then access is allowed. Context is switched to the object owner's context.
■ Otherwise, access is denied.

### 6.2.8.5 Accessing Standard Interface Methods

Bytecodes:
invokeinterface

■ If the object is owned by the currently active context, then access is allowed.
■ Otherwise, if the JCRE is the currently active context, then access is allowed. Context is switched to the object owner's context.
■ Otherwise, access is denied.

### 6.2.8.6 Accessing Shareable Interface Methods

Bytecodes:
invokeinterface

■ If the object is owned by the currently active context, then access is allowed.
■ Otherwise, if the object's class implements a Shareable interface, and if the interface being invoked extends the Shareable interface, then access is allowed. Context is switched to the object owner's context.
■ Otherwise, if the JCRE is the currently active context, then access is allowed. Context is switched to the object owner's context.
■ Otherwise, access is denied.

### 6.2.8.7 Throwing Exception Objects

Bytecodes:
athrow

■ If the object is owned by the currently active context, then access is allowed.
■ Otherwise, if the object is designated a JCRE Entry Point Object, then access is allowed.
■ Otherwise, if the JCRE is the currently active context, then access is allowed.
■ Otherwise, access is denied.

### 6.2.8.8 Accessing Class Instance Objects

Bytecodes:
checkcast, instanceof

■ If the object is owned by the currently active context, then access is allowed.
■ Otherwise, if JCRE is the currently active context, then access is allowed.
■ Otherwise, if the object is designated a JCRE Entry Point Object, then access is allowed.
■ Otherwise, if the JCRE is the currently active context, then access is allowed.
■ Otherwise, access is denied.

### 6.2.8.9 Accessing Standard Interfaces

Bytecodes:
checkcast. instanceof

■ If the object is owned by the currently active context, then access is allowed.
■ Otherwise, if the JCRE is the currently active context, then access is allowed.
■ Otherwise, access is denied.

### 6.2.8.10 Accessing Shareable Interfaces

Bytecodes:
checkcast, instanceof

■ If the object is owned by the currently active context, then access is allowed.
■ Otherwise, if the object's class implements a Shareable interface, and if the object is being cast into (checkcast) or is an instance of (instanceof) an interface that extends the shareable interface, then access is allowed.
■ Otherwise, if the JCRE is the currently active context, then access is allowed.
■ Otherwise, access is denied.

### 6.3 Transient Objects and Applet contexts

Transient objects of CLEAR_ON_RESET type behave like persistent objects in that they can be accessed only when the currently active applet context is the same as the owner of the object (the currently active applet context at the time when the object was created).

Transient objects of CLEAR_ON_DESELECT type can only be created or accessed when the currently active applet context is the currently selected applet context. If any of the makeTrans ient factory methods is called to create a CLEAR_ON_DESELECT type transient object when the currently active applet context is not the currently selected applet context, the method shall throw a SystemException with reason code of ILLEGAL_TRANSIENT. If an attempt is made to access a transient object of CLEAR_ON_DESELECT type when the currently active applet context is not the currently selected applet context, the JCRE shall throw a SecurityException.

Applets that are part of the same package share the same group context. Every applet instance from a package shares all its object instances with all other instances from the same package. (This includes transient objects of both CLEAR_ON_RESET type and CLEAR_ON_DESELECT type owned by these applet instances.)

The transient objects of CLEAR_ON_DESELECT type owned by any applet instance within the same package shall be accessible when any of the applet instances in this package is the currently selected applet.

### 7. Transactions and Atomicity

A *transaction* is a logical set of updates of persistent data. For example, transferring some amount of money from one account to another is a banking transaction. It is important for transactions to be *atomic*: either all of the data fields are updated, or none are. The JCRE provides robust support for atomic transactions, so that card data is restored to its original pre-transaction state if the transaction does not complete normally. This mechanism protects against events such as power loss in the middle of a transaction, and against program errors that might cause data corruption should all steps of a transaction not complete normally.

### 7.1 Atomicity

Atomicity defines how the card handles the contents of persistent storage after a stop, failure, or fatal exception during an update of a single object or class field or array component. If power is lost during the update, the applet developer shall be able to rely on what the field or array component contains when power is restored.

The Java Card platform guarantees that any update to a single persistent object or class field will be atomic. In addition, the Java Card platform provides single component level atomicity for persistent arrays. That is, if the smart card loses power during the update of a data element (field in an object/class or component of an array) that shall be preserved across CAD sessions, that data element will be restored to its previous value.

Some methods also guarantee atomicity for block updates of multiple data elements. For example, the atomicity of the Util.arrayCopy method guarantees that either all bytes are correctly copied or else the destination array is restored to its previous byte values.

An applet might not require atomicity for array updates. The Util.arrayCopyNonAtomic method is provided for this purpose. It does not use the transaction commit buffer even when called with a transaction in progress.

### 7.2 Transactions

An applet might need to atomically update several different fields or array components in several different objects. Either all updates take place correctly and consistently, or else all fields/components are restored to their previous values.

The Java Card platform supports a transactional model in which an applet can designate the beginning of an atomic set of updates with a call to the JCSystem.beginTransaction method. Each object update after this point is conditionally updated. The field or array component appears to be updated-reading the field/array component back yields its latest conditional value-but the update is not yet committed.

When the applet calls JCSystem.commitTransaction, all conditional updates are committed to persistent storage. If power is lost or if some other system failure occurs prior to the completion of JCSystem.commi tTransaction, all conditionally updated fields or array components are restored to their previous values. If the applet encounters an internal problem or decides to cancel the transaction, it can programmatically undo conditional updates by calling JCSystem.abortTransaction.

### 7.3 Transaction Duration

A transaction always ends when the JCRE regains programmatic control upon return from the applet's select, deselect, process or install methods.. This is true whether a transaction ends normally, with an applet's call to commitTransaction, or with an abortion of the transaction (either programmatically by the applet, or by default by the JCRE). For more details on transaction abortion, refer to paragraph 7.6.

*Transaction duration* is the life of a transaction between the call to JCSystem.beginTransaction, and either a call to commitTransaction or an abortion of the transaction.

### 7.4 Nested Transactions

The model currently assumes that nested transactions are not possible. There can be only one transaction in progress at a time. If JCSystem.beginTransaction is called while a transaction is already in progress, then a TransactionException is thrown.

The JCSystem.transactionDepth method is provided to allow you to determine if a transaction is in progress.

### 7.5 Tear or Reset Transaction Failure

If power is lost (tear) or the card is reset or some other system failure occurs while a transaction is in progress, then the JCRE shall restore to their previous values all fields and array components conditionally updated since the previous call to JCSystem.beginTransaction.

This action is performed automatically by the JCRE when it reinitializes the card after recovering from the power loss, reset, or failure. The JCRE determines which of those objects (if any) were conditionally updated, and restores them.

Note - Object space used by instances created during the transaction that failed due to power loss or card reset can be recovered by the JCRE.

### 7.6 Aborting a Transaction

Transactions can be aborted either by an applet or by the JCRE.

### 7.6.1 Programmatic Abortion

If an applet encounters an internal problem or decides to cancel the transaction, it can programmatically undo conditional updates by calling JCSystem.abortTransaction. If this method is called, all conditionally updated fields and array components since the previous call to JCSystem. beginTransaction are restored to their previous values, and the JCSystem. transactionDepth value is reset to 0.

### 7.6.2 Abortion by the JCRE

If an applet returns from the select, deselect, process, or install methods with a transaction in progress, the JCRE automatically aborts the transaction. If a return from any of select, deselect, process or install methods occurs with a transaction in progress, the JCRE acts as if an exception was thrown.

### 7.6.3 Cleanup Responsibilities of the JCRE

Object instances created during the transaction that is being aborted can be deleted only if all references to these objects can be located and converted into null. The JCRE shall ensure that references to objects created during the aborted transaction are equivalent to a null reference.

### 7.7 Transient Objects

Only updates to persistent objects participate in the transaction. Updates to transient objects are never undone, regardless of whether or not they were "inside a transaction."

### 7.8 Commit Capacity

Since platform resources are limited, the number of bytes of conditionally updated data that can be accumulated during a transaction is limited. The Java Card technology provides methods to determine how much *commit capacity* is available on the implementation. The commit capacity represents an upper bound on the number of conditional byte updates available. The actual number of conditional byte updates available may be lower due to management overhead.

An exception is thrown if the commit capacity is exceeded during a transaction.

### 8. API Topics

The topics in this chapter complement the requirements specified in the *Java Card 2.1 API Draft 2 Specification*. The first topic is the Java Card UO functionality, which is implemented entirely in the APDU class. The second topic is the API supporting Java Card security and cryptography. The JCSystem class encapsulates the API version level.

Transactions within the API
Unless specifically called out in the *Java Card 2.1 API Specification*, the implementation of the API classes shall not initiate or otherwise alter the state of a transaction if one is in progress.

Resource Use within the API
Unless specifically called out in the *Java Card 2.1 API Specification*, the implementation shall support the invocation of API instance methods, even when the owner of the object instance is not the currently selected applet. In other words, unless specifically called out, the implementation shall not use resources such as transient objects of CLEAR_ON_DESELECT type.

Exceptions thrown by API classes
All exception objects thrown by the API implementation shall be temporary JCRE Entry Point Objects. Temporary JCRE Entry Point Objects cannot be stored in class variables, instance variables or array components. (See 6.2.1)

### 8.1 The APDU Class

The APDU class encapsulates access to the ISO 7816-4 based I/O across the card serial line. The APDU Class is designed to be independent of the underlying I/O transport protocol.

The JCRE may support T=0 or T=1 transport protocols or both.

### 8.1.1 T=0 specifics for outgoing data transfers

For compatibility with legacy CAD/terminals that do not support block chained mechanisms the APDU Class allows mode selection via the setOutgoingNoChaining method.

### 8.1.1.1 Constrained transfers with no chaining

When the no chaining mode of output transfer is requested by the applet by calling the setOutgoingNoChaining method, the following protocol sequence shall be followed.

Note - when the no chaining mode is used, calls to the waitExtension method shall throw an APDUException with reason code ILLEGAL_USE.

Notation
Le = CAD expected length.
Lr = Applet response length set via setOutgoingLength method.
<INS> = the protocol byte equal to the incoming header INS byte, which indicates that all data bytes will be transferred next.
<-INS> = the protocol byte that is the complement of the incoming header INS byte, which indicates about 1 data byte being transferred next.
<SW1,SW2> = the response status bytes as in ISO7816-4.

ISO 7816-4 CASE 2
Le == Lr
   1. The card sends Lr bytes of output data using the standard T=0 <INS> or <∼INS> procedure byte mechanism.
   2. The card sends <SW1,SW2> completion status on completion of the Applet.process method.
Lr < Le
   1. The card sends <0x61,Lr> completion status bytes
   2. The CAD sends GET RESPONSE command with Le = Lr.
   3. The card sends Lr bytes of output data using the standard T=0 <INS> or <∼INS> procedure byte mechanism.
   4. The card sends <SW1,SW2> completion status on completion of the Applet.process method.
Lr > Le
   1. The card sends Le bytes of output data using the standard T=0 <INS> or <∼INS> procedure byte mechanism.
   2. The card sends <0x61,(Lr-Le)> completion status bytes
   3. The CAD sends GET RESPONSE command with new Le <= Lr.
   4. The card sends (new) Le bytes of output data using the standard T=0 <INS> or <∼INS> procedure byte mechanism.
   5. Repeat steps 2-4 as necessary to send the remaining output data bytes (Lr) as required.
   6. The card sends <SW1,SW2> completion status on completion of the Applet. process method.
ISO 7816-4 CASE 4
   In Case 4, Le is determined after the following initial exchange:
   1. The card sends <0x61,Lr status bytes>
   2. The CAD sends GET RESPONSE command with Le <= Lr.
   The rest of the protocol sequence is identical to CASE 2 described above.

If the applet aborts early and sends less than Le bytes, zeros may be sent instead to fill out the length of the transfer expected by the CAD.

### 8.1.1.2 Regular Output transfers

When the no chaining mode of output transfer is not requested by the applet (that is, the setOutgoing method is used), the following protocol sequence shall be followed:

Any ISO-7816-3/4 compliant T=0 protocol transfer sequence may be used.

Note - The waitExtension method may be invoked by the applet between successive calls to sendBytes or sendBytesLong methods. The waitExtension method shall request an additional work waiting time (ISO 7816-3) using the 0x60 procedure byte.

### 8.1.1.3 Additional T=0 requirements

At any time, when the T=0 output transfer protocol is in use, and the APDU class is awaiting a GET RESPONSE command from the CAD in reaction to a response status of <0x61, xx> from the card, if the CAD sends in a different command, the sendBytes or the sendBytesLong methods shall throw an APDUException with reason code NO_TO_GETRESPONSE.

Calls to sendBytes or sendBytesLong methods from this point on shall result in an APDUException with reason code ILLEGAL_USE. If an ISOException is thrown by the applet after the NO_TO_GETRESPONSE exception has been thrown, the JCRE shall discard the response status in its reason code. The JCRE shall restart APDU processing with the newly received command and resume APDU dispatching.

### 8.1.2 T=1 specifics for outgoing data transfers

### 8.1.2.1 Constrained transfers with no chaining

When the no chaining mode of output transfer is requested by the applet by calling the setOutgoingNoChaining method, the following protocol sequence shall be followed:
Notation
   Le = CAD expected length.
   Lr = Applet response length set via setOutgoingLength method.

The transport protocol sequence shall not use block chaining. Specifically, the M-bit (more data bit) shall not be set in the PCB of the 1-blocks during the transfers (ISO 7816-3). In other words, the entire outgoing data (Lr bytes) shall be transferred in one 1-block.

(If the applet aborts early and sends less than Lr bytes, zeros shall be sent instead to fill out the remaining length of the block.)

Note - When the no chaining mode is used, calls to the wait Extension method shall throw an APDUException with reason code ILLEGAL_USE.

### 8.1.2.2 Regular Output transfers

When the no chaining mode of output transfer is not requested by the applet i.e the setOutgoing method is used, the following protocol sequence shall be followed:

Any ISO-7816-3/4 compliant T=1 protocol transfer sequence may be used.

Note - The waitExtension method may be invoked by the applet between successive calls to sendBytes or sendBytesLong methods. The waitExtension method shall send an S-block command with WTX request of INF units, which is equivalent to a request of 1 additional work waiting time in T=0 mode. (See ISO 7816-3).

### 8.2 The security and crypto packages

The get Instance method in the following classes return an implementation instance in the context of the calling applet of the requested algorithm:
javacard.security.MessageDigest
javacard.security.Signature
javacard.security.RandomData
javacardx.crypto.Cipher.

An implementation of the JCRE may implement 0 or more of the algorithms listed in the API. When an algorithm that is not implemented is requested this method shall throw a CryptoException with reason code NO_SUCH_ALGORITHM.

Implementations of the above classes shall extend the corresponding base class and implement all the abstract methods. All data allocation associated with the implementation instance shall be performed at the time of instance construction to ensure that any lack of required resources can be flagged early during the installation of the applet.

Similarly, the buildKey method of the javacard.security.keyBuilder class returns an implementation instance of the requested Key type. The JCRE may implement 0 or more types of keys. When a key type that is not implemented is requested, the method shall throw a CryptoException with reason code NO_SUCH_ALGORITHM.

Implementations of key types shall implement the associated interface. All data allocation associated with the key implementation instance shall be performed at the time of instance construction to ensure that any lack of required resources can be flagged early during the installation of the applet.

### 8.3 JCSystem Class

In Java Card 2.1. the getvers ion method shall return (short) 0x0201.

### 9. Virtual Machine Topics

The topics in this chapter detail virtual machine specifics.

### 9.1 Resource Failures

A lack of resources condition (such as heap space) which is recoverable shall result in a SystemException with reason code NO_RESOURCE. The factory methods in JCSystem used to create transient arrays throw a SystemException with reason code NO_TRANSIENT_SPACE to indicate lack of transient space.

All other (non-recoverable) virtual machine errors such as stack overflow shall result in a virtual machine error. These conditions shall cause the virtual machine to haft. When such a non-recoverable virtual machine error occurs, an implementation can optionally require the card to be muted or blocked from further use.

### 10. Applet Installer

Applet installation on smart cards using Java Card technology is a complex topic. The Java Card API 2.1 is intended to give JCRE implementers as much freedom as possible in their implementations. However, some basic common specifications are required in order to allow Java Card applets to be installed without knowing the implementation details of a particular installer.

This specification defines the concept of an Installer and specifies minimal installation requirements in order to achieve interoperability across a wide range of possible Installer implementations.

The Applet Installer is an optional part of the JCRE 2.1 Specification. That is, an implementation of the JCRE does not necessarily need to include a post-issuance Installer. However, if implemented, the installer is required to support the behavior specified in section 9.1.

### 10.1 The Installer

The mechanisms necessary to install an applet on smart cards using Java Card technology are embodied in an on-card component called the *Installer*.

To the CAD the Installer appears to be an applet. It has an AID, and it becomes the currently selected applet when this AID is successfully processed by a SELECT command. Once selected, the Installer behaves in much the same way as any other applet:
- It receives all APDUs just like any other selected applet.
- Its design specification prescribes the various kinds and formats of APDUs that it expects to receive along with the semantics of those commands under various preconditions.
- It processes and responds to all APDUs that it receives. Incorrect APDUs are responded to with an error condition of some kind.
- When another applet is selected (or when the card is reset or when power is removed from the card), the Installer becomes deselected and remains suspended until the next time that it is SELECTed.

### 10.1.1 Installer Implementation

The Installer need not be implemented as an applet on the card. The requirement is only that the Installer functionality be SELECTable. The corollary to this requirement is that installer component shall not be able to be invoked when a non-Installer applet is selected nor when no applet is selected.

Obviously. a JCRE implementer could choose to implement the installer as an applet. If so, then the Installer might be coded to extend the Applet class and respond to invocations of the select, process, and deselect methods.

But a JCRE implementer could also implement the Installer in other ways, as long as it provides the SELECTable behavior to the outside world. In this case, the JCRE implementer has the freedom to provide some other mechanism by which APDUs are delivered to the Installer code module.

### 10.1.2 Installer AID

Because the Installer is SELECTable, it shall have an AID. JCRE implementers are free to choose their own AID by which their Installer is selected. Multiple installers may be implemented.

### 10.1.3 Installer APDUs

The Java Card API 2.1 does not specify any APDUs for the Installer. JCRE implementers are entirely free to choose their own APDU commands to direct their installer in its work.

The model is that the Installer on the card is driven by an installation program running on the CAD. in order for installation to succeed, this CAD installation program shall be able to:
- Recognize the card.
- SELECT the Installer on the card.
- Drive the installation process by sending the appropriate APDUs to the card Installer. These APDUs will contain:
   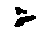 Authentication information, to ensure that the installation is authorized.
   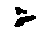 The applet code to be loaded into the card's memory.
   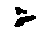 Linkage information to link the applet code with code already on the card.
   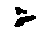 Instance initialization parameter data to be sent to the applet's install method.

The Java Card API 2.1 does not specify the details of the CAD installation program nor the APDUs passed between it and the Installer.

### 10.1.4 Installer Behavior

JCRE implementers shall also define other behaviors of their Installer, including:
- Whether or not installation can be aborted and how this is done.
- What happens if an exception, reset, or power fail occurs during installation.
- What happens if another applet is selected before the Installer is finished with its work.

The JCRE shall guarantee that an applet will *not* be deemed successfully installed if:
- the applet's install method throws an exception before successful return from the Applet.register method. (Refer to paragraph 9.2.)

### 10.1.5 Installer Privileges

Although an Installer may be implemented as an applet, an Installer will typically require access to features that are not available to "other applets. For example, depending on the JCRE implementer's implementation, the Installer will need to:
- Read and write directly to memory, bypassing the object system and/or standard security.
- Access objects owned by other applets or by the JCRE.
- Invoke non-entry point methods of the JCRE.
- Be able to invoke the install method of a newly installed applet.

Again, it is up to each JCRE iniplementer to determine the Installer implementation and supply such features in their JCRE implementations as necessary to support their Installer. JCRE implementers are also responsible for the security of such features, so that they are not available to normal applets.

### 10.2 The Newly Installed Applet

There is a single interface between the Installer and the applet that is being installed. After the Installer has correctly prepared the applet for execution (performed steps such as loading and linking), the Installer shall invoke the applet's install method. This method is defined in the Applet class.

The precise mechanism by which an applet's install method is invoked from the Installer is a JCRE implementer-defined implementation detail. However, there shall be a context switch so that any context-related operations performed by the install method (such as creating new objects) are done in the context of the new applet and not in the context of the installer. The Installer shall also ensure that array objects created during applet class initialization (<clinit>) methods are also owned by the context of the new applet.

The installation of an applet is deemed complete if all steps are completed without failure or an exception being thrown, up to and including successful return from executing the Applet. register method. At that point, the installed applet will be selectable.

The maximum size of the parameter data is 32 bytes. And for security reasons, the bArray parameter is zeroed after the return (just as the APDU buffer is zeroed on return from an applet's process method.)

### 10.2.1 Installation Parameters

Other than the maximum size of 32 bytes, the Java Card API 2.1 does not specify anything about the contents of the installation parameter byte array segment. This is fully defined by the applet designer and can be in any format desired. In addition, these installation parameters are intended to be opaque to the Installer.

JCRE implementers should design their Installers so that it is possible for an installation program running in a CAD to specify an arbitrary byte array to be delivered to the Installer. The Installer simply forwards this byte array to the target applet's install method in the bArray parameter. A typical implementation might define a JCRE implementer-proprietary APDU command that has the semantics "call the applet's install method passing the contents of the accompanying byte array."

### 11. API Constants

Some of the API classes don't have values specified for their constants in the *Java Card API 2.1 Reference*. If constant values are not specified consistently by implementers of this JCRE 2.1 Specification, industry-wide interoperability is impossible. This chapter provides the required values for constants that are not specified in the *Java Card API 2.1 Reference*.

Class javacard.framework.APDU
public static final byte PROTOCOL_T0 = 0;
public static final byte PROTOCOL_T1 = 1;

Class javacard.framework.APDUException
public static final short ILLEGAL_USE = 1;
public static final short BUFFER_BOUNDS = 2;
public static final short BAD_LENGTH = 3;
public static final short IO_ERROR = 4;
public static final short NO_TO_GETRESPONSE = OxAA;

Interface javacard.framework.ISO7816
public final static short SW_NO_ERROR = (short)0x9000;
public final static short SW_BYTES_REMAINING_00 = 0x6100;
public final static short SW_WRONG_LENGTH = 0x6700;
public static final short SW_SECURITY_STATUS_NOT_SATISFIED = 0x6982;
public final static short SW_FILE_INVALID = 0x6983;
public final static short SW_DATA_INVALID = 0x6984;
public final static short SW_CONDITIONS_NOT_SATISFIED = 0x6985;
public final static short SW_COMMAND_NOT_ALLOWED = 0x6986;
public final static short SW_APPLET_SELECT_FAILED = 0x6999;
public final static short SW_WRONG_DATA = 0x6A80;
public final static short SW_FUNC_NOT_SUPPORTED = 0x6A81;
public final static short SW_FILE_NOT_FOUND = 0x6A82;
public final static short SW_RECORD_NOT_FOUND = 0x6A83;
public final static short SW_INCORRECT_P1P2 = 0x6A86;
public final static short SW_WRONG_P1P2 = 0x6B00;
public final static short SW_CORRECT_LENGTH_00 = 0x6C00;
public final static short SW_INS_NOT_SUPPORTED = Ox6DOO;
public final static short SW_CLA_NOT_SUPPORTED = 0x6E00;
public final static short SW_UNKNOWN = 0x6F00;
public static final short SW_FILE_FULL = 0x6A84;
public final static byte OFFSET_CLA = 0;
public final static byte OFFSET_INS = 1;
public final static byte OFFSET_P1 = 2;
public final static byte OFFSET_P2 = 3;
public final static byte OFFSET_LC = 4;
public final static byte OFFSET_CDATA= 5;
public final static byte CLA_ISO7816 = 0x00;
public final static byte INS_SELECT = (byte) 0xA4;
public final static byte INS_EXTERNAL_AUTHENTICATE = (byte) 0x82;

Class javacard.framework.JCSystem
public static final byte NOT_A_TRANSIENT_OBJECT = 0;
public static final byte CLEAR_ON_RESET = 1;
public static final byte CLEAR_ON_DESELECT = 2;

Class javacard.framework.PINException
public static final short ILLEGAL_VALUE = 1;

Class javacard.framework.SystemException
public static final short ILLEGAL_VALUE = 1;
public static final short NO_TRANSIENT_SPACE = 2;
public static final short ILLEGAL_TRANSIENT = 3;
public static final short ILLEGAL_AID = 4;
public static final short NO_RESOURCE = 5;

Class javacard.security.CryptoException
public static final short ILLEGAL_VALUE = 1;
public static final short UNINITIALIZED_KEY = 2;
public static final short NO_SUCH_ALGORITHM = 3;
public static final short INVALID_INIT = 4;
public static final short ILLEGAL_USE = 5;

Class javacard.security.KeyBuilder
public static final byte TYPE_DES_TRANSIENT_RESET = 1;
public static final byte TYPE_DES_TRANSIENT_DESELECT = 2;
public static final byte TYPE_DES = 3;
public static final byte TYPE_RSA_PUBLIC = 4;
public static final byte TYPE_RSA_PRIVATE = 5;
public static final byte TYPE_RSA_CRT_PRIVATE = 6;
public static final byte TYPE_DSA_PUBLIC = 7;
public static final byte TYPE_DSA_PRIVATE = 8;
public static final short LENGTH_DES = 64;
public static final short LENGTH_DES3_2KEY = 128;
public static final short LENGTH_DES3_3KEY = 192;
public static final short LENGTH_RSA_512 = 512;
public static final short LENGTH_RSA_768 = 768;
public static final short LENGTH_RSA_1024 = 1024;
public static final short LENGTH_RSA_2048 = 2048;
public static final short LENGTH_DSA_512 = 512;
public static final short LENGTH_DSA_768 = 768;
public static final short LENGTH_DSA_1024 = 1024;

Class javacard.security.MessageDigest
public static final byte ALG_SHA = 1;
public static final byte ALG_MD5 = 2;
public static final byte ALG_RIPEMD160 = 3;

Class javacard.security.RandomData
public static final byte ALG_PSEUDO_RANDOM = 1;
public static final byte ALG_SECURE_RANDOM = 2;

Class javacard.security.Signature
public static final byte ALG_DES_MAC4_NOPAD = 1;
public static final byte ALG_DES_MAC8_NOPAD = 2;
public static final byte ALG_DES_MAC4_ISO9797_MI = 3;
public static final byte ALS_DES_MAC8_ISO9797_M1 = 4;
public static final byte ALG_DES_MAC4_ISO9797_M2 = 5;
public static final byte ALG_DES_MAC8_ISO9797_M2 = 6;
public static final byte ALG_DES_MAC4_PKCSS = 7;
public static final byte ALG_DES_MACB_PKCS5 = 8;
public static final byte ALG_RSA_SHA_ISO9796 = 9;
public static final byte ALG_RSA_SHA_PKCS1 = 10;
public static final byte ALG_RSA_MDS_PKCS1 = 11;
public static final byte ALG_RSA_RIPEMD160_ISO9796 = 12;
public static final byte ALG_RSA_RIPEMD160_PKCS1 = 13;
public static final byte ALG_DSA_SHA = 14;
public static final byte MODE_SIGN = 1;
public static final byte MODE_VERIFY = 2;

Class javacardx.crypto.Cipher
public static final byte ALG_DES_CBC_NOPAD = 1;
public static final byte ALG_DES_CBC_ISO9797_M1 = 2;
public static final byte ALG_DES_CBC_ISO9797_M2 = 3;
public static final byte ALG_DES_CBC_PKCS5 = 4;
public static final byte ALG_DES_ECB_NOPAD = 5;
public static final byte ALG_DES_ECB_ISO9797_M1 = 6;
public static final byte ALG_DES_ECB_ISO9797_M2 = 7;
public static final byte ALG_DES_ECB_PKCS5 = 8;
public static final byte ALG_RSA_ISO14888 = 9;
public static final byte ALG_RSA_PKCS1 = 10;
public static final byte MODE_DECRYPT = 1;
public static final byte MODE_ENCRYPT = 2;

### Glossary

**AID** is an acronym for Application IDentifier as defined in ISO 7816-5.

**APDU** is an acronym for Application Protocol Data Unit as defined in ISO 7816-4.

**API** is an acronym for Application Programming Interface. The API defines calling conventions by which an application program accesses the operating system and other services.

**Applet** within the context of this document means a Java Card Applet, which is the basic unit of selection, context, functionality, and security in Java Card technology.

**Applet developer** refers to a person creating a Java Card applet using the Java Card technology specifications.

**Applet firewall** is the mechanism in the Java Card technology by which the VM prevents an applet from making unauthorized accesses to objects owned by other applet contexts or the JCRE context, and reports or otherwise addresses the violation.

**Atomic operation** is an operation that either completes in its entirety (if the operation succceeds) or no part of the operation completes at all (if the operation fails).

Atomicity refers to whether a particular operation is atomic or not and is necessary for proper data recovery in cases in which power is lost or the card is unexpectedly removed from the CAD.

**ATR** is an acronym for Answer to Reset. An ATR is a string of bytes sent by the Java Card after a reset condition.

**CAD** is an acronym for Card Acceptance Device. The CAD is the device in which the card is inserted.

**Cast** is the explicit conversion from one data type to another.

**cJCK** is the test suite to verify the compliance of the implementation of the Java Card Technology specifications. The cJCK uses the JavaTest tool to run the test suite.

**Class** is the prototype for an object in an object-oriented language. A class may also be considered a set of objects that share a common structure and behavior. The structure of a class is determined by the class variables that represent the state of an object of that class and the behavior is given by a set of methods associated with the class.

Classes are related in a class hierarchy. One class may be a specialization (a subclass) of another (its superclass), it may have reference to other classes, and it may use other classes in a client-server relationship.

**Context** (See Applet execution context)

**Currently active context.** The JCRE keeps track of the currently active Java Card applet context. When a virtual method is invoked on an object, and a context switch is required and permitted, the currently active context is changed to correspond to the applet context that owns the object. When that method returns, the previous context is restored. Invocations of static methods have no effect on the currently active context. The currently active context and sharing status of an object together determine if access to an object is permissible.

**Currently selected applet**. The JCRE keeps track of the currently selected Java Card applet. Upon receiving a SELECT command with this applet's AID, the JCRE makes this applet the currently selected applet. The JCRE sends all APDU commands to the currently selected applet.

**EEPROM** is an acronym for Electrically Erasable, Programmable Read Only Memory.

**Firewall** (see Applet Firewall).

**Framework** is the set of classes that implement the API. This includes core and extension packages. Responsibilities include dispatching of APDUs, applet selection, managing atomicity, and installing applets.

**Garbage collection** is the process by which dynamically allocated storage is automatically reclaimed during the execution of a program.

**Instance variables**, also known as fields, represent a portion of an object's internal state. Each object has its own set of instance variables. Objects of the same class will have the same instance variables, but each object can have different values.

**Instantiation**, in object-oriented programming, means to produce a particular object from its class template. This involves allocation of a data structure with the types specified by the template, and initialization of instance variables with either default values or those provided by the class's constructor function.

**JAR** is an acronym for Java Archive. JAR is a platform-independent file format that combines many files into one.

**Java Card Runtime Environment (JCRE)** consists of the Java Card Virtual Machine, the framework, and the associated native methods.

**JC21RI** is an acronym for the Java Card 2.1 Reference Implementation.

**JCRE** implementer refers to a person creating a vendor-specific implementation using the Java Card API.

**JCVM** is an acronym for the Java Card Virtual Machine. The JCVM is the foundation of the OP card architecture. The JCVM executes byte code and manages classes and objects. It enforces separation between applications (firewalls) and enables secure data sharing.

**JDK** is an acronym for Java Development Kit. The JDK is a Sun Microsystems, Inc. product that provides the environment required for programming in Java. The JDK is available for a variety of platforms, but most notably Sun Solaris and Microsoft Windows®.

**Method** is the name given to a procedure or routine, associated with one or more classes, in object-oriented languages.

Namespace is a set of names in which all names are unique.

Object-Oriented is a programming methodology based on the concept of an *object*, which is a data structure encapsulated with a set of routines, called *methods*, which operate on the data.

**Objects**, in object-oriented programming, are unique instances of a data structure defined according to the template provided by its class. Each object has its own values for the variables belonging to its class and can respond to the messages (methods) defined by its class.

**Package** is a namespace within the Java programming language and can have classes and interfaces. A package is the smallest unit within the Java programming language.

**Persistent object** Persistent objects and their values persist from one CAD session to the next, indefinitely. Objects are persistent by default. Persistent object values are updated atomically using transactions. The term persistent does not mean there is an object-oriented database on the card or that objects are serialized/deserialized, just that the objects are not lost when the card loses power.

**Shareable interface** Defines a set of shared interface methods. These interface methods can be invoked from one applet context when the object implementing them is owned by another applet context.

**Shareable interface** object (SIO) An object that implements the shareable interface.

**Transaction** is an atomic operation in which the developer defines the extent of the operation by indicating in the program code the beginning and end of the transaction.

**Transient object**. The values of transient objects do not persist from one CAD session to the next, and are reset to a default state at specified intervals. Updates to the values of transient objects are not atomic and are not affected by transactions.

Date: 16 December 1998

Dear Java Card Licensee,

JCRE21-DF2-14DEC98.zip contains a second draft of the Java Card 2.1
Runtime Environment specification, dated December 14, 1998, for
Licensee review and comment. We have worked incorporate and clarify
the document based upon the review feedback we've received to date.

Complete contents of the zip archive are as follows:

| | |
|---|---|
| READ-ME-JCRE21-DF2.txt | - This READ ME text file |
| JCRE21-DF2.pdf | - "Java Card Runtime Environment (JCRE) 2.1 Specification" in PDF format |
| JCRE21-DF2-changebar.pdf | - The revised document with change bars from previous version for ease of review. |

Summary of changes:
1. This is now a draft 2 release and will be published on the public web site shortly.
2. New description of temporary JCRE Entry Point Objects has been introduced for purposes of restricting unauthorized access.
   Firewall chapter 6.2.1.
3. Global arrays now have added security related restrictions similar to temporary JCRE Entry Point objects. Firewall chapter
   6.2.2.
4. Detailed descriptions of the bytecodes with respect to storing restrictions for temporary JCRE Entry Point Objects and
   Global arrays added. Chapter 6.2.8.
5. General statement about JCRE owned exception objects added in chapter 8.
6. Corrected description of Virtual machine resource failures in transient factory methods. Chapter 9.1.

The "Java Card Runtime Environment 2.1 Specification" specifies the minimum behavior and runtime environment for complete Java Card 2.1 implementation, as referred to by the Java Card APT 2.1 and Java Card 2.1 Virtual Machine Specification documents. This specification is required to ensure compatible operation of Java Card applets. The purpose of this specification document is to bring all the JCRE elements together in a concise manner as part of the Java Card 2.1 specification suite.

Please send review comments to <javaoem-javacard@sun.com> or to my address as below. On behalf of the Java Card team, I look forward to hearing from you.

Best,
Godfrey DiGiorgi

Godfrey DiGiorgi - godfrey.digiorgi@eng.sun.com
OEM Licensee Engineering
Sun Microsystems / Java Software
+1 408 343-1506 - FAX +1 408 517-5460

## Claims

1. A method for operating a small footprint device (400) that comprises a processing machine (410), wherein the small footprint device is a smart card or a cellular telephone, wherein program modules are executed on the processing machine, and wherein the processing machine (410) comprises a virtual machine (720) running on a processor (300) and includes an object system for managing the objects of an object-oriented implementation, **characterised by**:
executing groups of one or more program modules in separate contexts (420, 620; 760, 770, 780; 1000, 1010, 1020) running on said virtual machine,
providing a context barrier (600; 600') for separating and isolating the contexts and for controlling the access of a program module executing in one context to information and/or a program module executing in another context, wherein each of said objects is owned by an associated context, and
providing a global data structure, wherein each program module of each context is allowed to read data from and write data to the global data structure, and wherein said global data structure is used to pass references to objects between contexts.

2. The method of claim 1 wherein said global data structure is provided temporarily.

3. The method of claim 1 or 2 wherein only one of the contexts is allowed to create said global data structure.

4. The method of one of the preceding claims 1 to 3 wherein said method further comprises allocating separate respective name spaces for each context.

5. The method of one of the preceding claims 1 to 3 wherein said method further comprises allocating respective memory spaces for each context.

6. The method of one of the preceding claims 1 to 5 wherein said controlling of the access of a program module executing in one context to information and/or a program module executing in another context by said context barrier (600; 600') further comprises preventing the access if the access is unauthorized and enabling the access if the access is authorized.

7. The method of claim 6 wherein said authorization of said access includes at least one security check.

8. A computer program product embodying a program of instructions for operating a small footprint device (400) according to one of the method claims 1 to 7.

## Patentansprüche

1. Verfahren zum Betreiben einer kleinformatigen Einrichtung (400), welche eine Verarbeitungsmaschine (410) aufweist, wobei die kleinformatige Einrichtung eine Smartcard oder ein Mobiltelefon ist, wobei Programmodule auf der Verarbeitungsmaschine ausgeführt werden, und wobei die Verarbeitungsmaschine (410) eine virtuelle Maschine (720) aufweist, die auf einem Prozessor (300) läuft, und ein Objektsystem zum Verwalten der Objekte einer objektorientierten Implementierunung enthält, **gekennzeichnet durch**:
Ausführen von Gruppen aus einem oder mehreren Programmodulen in getrennten Kontexten (420, 620; 760, 770, 780; 1000, 1010, 1020), die auf einer virtuellen Maschine laufen,
Bereitstellen einer Kontextbarriere (600; 600'), um die Kontexte voneinander zu trennen und zu isolieren und um den Zugriff eines Programmoduls, das in einem Kontext abläuft, auf Information und/oder auf ein Programmodul, welches in einem anderen Kontext abläuft, zu kontrollieren, wobei jedes der Objekte einem zugeordneten Kontext zugehörig ist, und
Bereitstellen einer globalen Datenstruktur, wobei jedes Programmodul jedes Kontexts Daten von der globalen Datenstruktur lesen und in diese schreiben darf und wobei die globale Datenstruktur zum Leiten von Referenzen zu Objekten zwischen Kontexten verwendet wird.

2. Verfahren nach Anspruch 1, wobei die globale Datenstruktur zeitweise bereitgestellt wird.

3. Verfahren nach Anspruch 1 oder 2, wobei nur einer der Kontexte die globale Datenstruktur erzeugen darf.

4. Verfahren nach einem der vorstehenden Ansprüche 1 bis 3, wobei das Verfahren weiterhin das Zuordnen getrennter entsprechender Namensräume für jeden Kontext aufweist.

5. Verfahren nach einem der vorstehenden Ansprüche 1 bis 3, wobei das Verfahren weiterhin das Zuordnen entsprechender Speicherräume für jeden Kontext aufweist.

6. Verfahren nach einem der vorstehenden Ansprüche 1 bis 5, wobei das Kontrollieren des Zugriffs eines Programmoduls, welches in einem Kontext abläuft, auf Information und/oder auf ein Programmodul, welches in einem anderen Kontext abläuft, mit Hilfe der Kontextbarriere (600; 600') weiterhin das Verhindern des Zugriffs aufweist, wenn der Zugriff nicht autorisiert ist, und das Freigeben des Zugriffs aufweist, wenn der Zugriff autorisiert ist.

7. Verfahren nach Anspruch 6, wobei die Autorisierung des Zugriffs zumindest eine Sicherheitsüberprüfung umfasst.

8. Computerprogrammprodukt, welches ein Programm aus Befehlen verwirklicht, um eine kleinformatige Einrichtung (400) nach einem der Verfahrensansprüche 1 bis 7 zu betreiben.

## Revendications

1. Procédé pour exploiter un dispositif à faible empreinte mémoire (400) qui comprend une machine de traitement (410), le dispositif à faible empreinte mémoire étant une carte à microprocesseur ou un téléphone cellulaire, dans lequel des modules de programme sont exécutés sur la machine de traitement, et dans lequel la machine de traitement (410) comprend une machine virtuelle (720) s'exécutant sur un processeur (300) et comporte un système d'objets pour gérer les objets d'une implémentation basée sur des objets **caractérisé en ce que** : on exécute des groupes d'un ou plusieurs modules de programme dans des contextes séparés (420, 620; 760, 770, 780; 1000, 1010, 1020) s'exécutant sur ladite machine virtuelle, on établit une barrière de contexte (600; 600') pour séparer et isoler les contextes et pour commander l'accès d'un module de programme s'exécutant dans un contexte à de l'information et/ou un module de programme s'exécutant dans un autre contexte, chacun desolits objets appartenaut à un contexte assou'e', et on établit une structure de données globale, chaque module de programme de chaque contexte ayant la permission de lire des données et d'écrire des données dans la structure de données globale, et ladite structure de données globale étant utilisée pour faire passer des références à des objets entre contextes.

2. Procédé selon la revendication 1, dans lequel la structure de données globale est établie temporairement.

3. Procédé selon la revendication 1 ou 2, dans lequel un seul des contextes a la permission de créer la structure de données globale.

4. Procédé selon l'une des revendications 1 à 3 précédentes, dans lequel le procédé comprend en outre l'allocation d'espaces de noms respectifs séparés pour chaque contexte.

5. Procédé selon l'une des revendications 1 à 3 précédentes, dans lequel le procédé comprend en outre l'allocation d'espaces de mémoire respectifs pour chaque contexte.

6. Procédé selon l'une des revendications 1 à 5 précédentes, dans lequel la commande, par la barrière de contexte (600; 600'), de l'accès d'un module de programme s'exécutant dans un contexte à de l'information et/ou un module de programme s'exécutant dans un autre contexte, comprend en outre l'opération consistant à empêcher l'accès si l'accès n'est pas autorisé et à permettre l'accès si l'accès est autorisé.

7. Procédé selon la revendication 6, dans lequel l'autorisation de l'accès comprend au moins un contrôle de sécurité.

8. Programme-produit d'ordinateur constituant un programme d'instructions pour exploiter un dispositif à faible empreinte mémoire (400) selon l'une des revendications de procédé 1 à 7.
